(19) **Europäisches Patentamt** / **European Patent Office** / **Office européen des brevets**

(11) **EP 4 715 909 A1**

(12) **EUROPEAN PATENT APPLICATION**
published in accordance with Art. 153(4) EPC

(43) Date of publication:
25.03.2026 Bulletin 2026/13

(21) Application number: 24862926.3

(22) Date of filing: 06.09.2024

(51) International Patent Classification (IPC):
*H01M 4/62* (2006.01)  *C08F 293/00* (2006.01)
*H01M 4/13* (2010.01)  *H01M 4/139* (2010.01)

(52) Cooperative Patent Classification (CPC):
C08F 293/00; H01M 4/13; H01M 4/139; H01M 4/62;
Y02E 60/10

(86) International application number:
PCT/JP2024/032118

(87) International publication number:
WO 2025/053277 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.09.2023 JP 2023144761

(71) Applicant: Daikin Industries, Ltd.
Osaka-shi, Osaka 530-0001 (JP)

(72) Inventors:
• TERADA, Junpei
Osaka-Shi, Osaka 530-0001 (JP)
• ICHINOSE, Yuma
Osaka-Shi, Osaka 530-0001 (JP)
• FURUTANI, Takahiro
Osaka-Shi, Osaka 530-0001 (JP)
• YAMAZAKI, Shigeaki
Osaka-Shi, Osaka 530-0001 (JP)

(74) Representative: Hoffmann Eitle
Patent- und Rechtsanwälte PartmbB
Arabellastraße 30
81925 München (DE)

(54) **BINDER FOR NONAQUEOUS ELECTROLYTE BATTERIES, ELECTRODE MIXTURE, ELECTRODE, AND NONAQUEOUS ELECTROLYTE BATTERY**

(57) Provided is a binder for a non-aqueous electrolyte battery, comprising a polymer comprising a segment A having a glass transition temperature of 25°C or less and a segment B having a melting point of 50°C or more.

EP 4 715 909 A1

**Description**

TECHNICAL FIELD

The present disclosure relates to a binder for a non-aqueous electrolyte battery, an electrode mixture, an electrode, and a non-aqueous electrolyte battery.

BACKGROUND ART

Patent Literature 1 discloses an electrode mixture slurry for a lithium secondary battery, comprising an electrode active material (A), a binder (B), and a fluoroelastomer particle (C).

Patent Literature 2 discloses a binder comprising a fluorine-containing polymer, wherein the fluorine-containing polymer has a polymerization unit based on vinylidene fluoride and a polymerization unit based on a monomer having an amide group (-CO-NRR' wherein R and R' are the same or different and each represent a hydrogen atom or an alkyl group optionally having a substituent) or an amide bond (-CO-NR"- wherein R" represents a hydrogen atom, an alkyl group optionally having a substituent, or a phenyl group optionally having a substituent), and has solution viscosity of 10 to 20,000 mPa·s.

Patent Literature 3 discloses a binder for a battery comprising a fluorine-containing copolymer, wherein the fluorine-containing copolymer contains a repeating unit (a) based on vinylidene fluoride and at least one repeating unit (b) selected from the group consisting of a repeating unit (b1) represented by a general formula (b1): $-(CH_2-CFRf^1)-$ wherein $Rf^1$ is a linear or branched fluorinated alkyl group or fluorinated alkoxy group having 1 to 12 carbon atoms, and, when the number of carbon atoms is 2 or more, optionally includes oxygen atom between carbon atoms thereof, and a repeating unit (b2) represented by a general formula (b2): $-(CHF-CHRf^2)-$ wherein $Rf^2$ is a linear or branched fluorinated alkyl group or fluorinated alkoxy group having 1 to 12 carbon atoms, and, when the number of carbon atoms is 2 or more, optionally includes oxygen atom between carbon atoms thereof, and the fluorine-containing copolymer has a molar ratio of the repeating unit (a) to the repeating unit (b), ((a)/(b)), of 95/5 to 5/95.

RELATED ART

PATENT DOCUMENTS

Patent Literature 1: International Publication No. WO 2011/002097
Patent Literature 2: Japanese Patent Laid-Open No. 2013-219016
Patent Literature 3: International Publication No. WO 2022/039260

SUMMARY OF THE INVENTION

PROBLEM TO BE SOLVED BY THE INVENTION

An object of the present disclosure is to provide a binder for a non-aqueous electrolyte battery that can form an electrode material layer having excellent softness and toughness.

MEANS FOR SOLVING THE PROBLEM

According to the present disclosure, provided is a binder for a non-aqueous electrolyte battery containing a polymer containing a segment A having a glass transition temperature of 25°C or less and a segment B having a melting point of 50°C or more.

EFFECT OF INVENTION

According to the present disclosure, it is possible to provide a binder for a non-aqueous electrolyte battery that can form an electrode material layer having excellent softness and toughness.

DESCRIPTION OF EMBODIMENTS

Hereinafter, specific embodiments of the present disclosure will be described in detail, but the present disclosure is not limited to the following embodiments.

A wound type non-aqueous electrolyte battery is produced by interposing a separator between a positive electrode and a negative electrode and winding them. Since bending stress is applied to also the electrode material layer of the electrode during winding, the binder used to form the electrode material layer is required to have properties capable of providing an electrode material layer that has excellent softness and can withstand bending stress. Hence, Patent Literature 3 proposes a binder containing a fluorine-containing copolymer containing a repeating unit (a) having a specific structure and a repeating unit (b) having a specific structure in a significantly limited molar ratio, as a binder capable of forming an electrode material layer that exhibits sufficient softness.

The electrode material layer formed using the binder disclosed in Patent Literature 3 has sufficient softness to such an extent that no cracks occur when the layer is wound while being fastened. On the other hand, in some methods for producing a wound type battery, a separator is interposed between a positive electrode and a negative electrode, which is then wound while a certain tension is applied thereto, in some cases. When such production methods are used, not only bending stress but also tension is imparted to the electrode material layer. The present inventors have found that, when not only softness but also toughness can be imparted to the electrode material layer used in such production methods, a battery exhibiting high performance can be produced.

The binder for a non-aqueous electrolyte battery of the present disclosure is developed under such circumstances, and an electrode material layer having excellent softness and toughness can be formed by using the binder for a non-aqueous electrolyte battery of the present disclosure.

In the present disclosure, the softness and toughness of the electrode material layer can be confirmed by performing, for example, a three-point bending test of an electrode including an electrode material layer. The electrode material layer of the electrode having a small maximum test force as measured by the three-point bending test can be said to have excellent softness. The electrode material layer of the electrode having a large half width as measured by the three-point bending test can be said to have excellent toughness. When a curve is drawn by taking the stroke of an autograph as an abscissa and the stress as an ordinate using the results of the three-point bending test of the electrode, the half width can be specified as the peak width at a stress half the peak of the stress.

That is, according to the present disclosure, provided is a binder for a non-aqueous electrolyte battery containing a polymer containing a segment A having a glass transition temperature of 25°C or less and a segment B having a melting point of 50°C or more (hereinafter, sometimes referred to as the first binder for a non-aqueous electrolyte battery).

In addition, according to the present disclosure, provided is a binder for a non-aqueous electrolyte battery containing a polymer, wherein the polymer has a glass transition temperature and a melting point, contains a 2,3,3,3-tetrafluoropropene unit, and has an extraction in tetrahydrofuran at 25°C of 5% by mass or less (hereinafter, sometimes referred to as the second binder for a non-aqueous electrolyte battery).

In the present disclosure, the non-aqueous electrolyte means a non-aqueous electrolyte in a liquid state and is distinguished from solid electrolytes such as a polymer electrolyte and an inorganic solid electrolyte.

First, the constitution of the first binder for a non-aqueous electrolyte battery will be described in detail.

1. First binder for non-aqueous electrolyte battery

The first binder for a non-aqueous electrolyte battery contains a polymer containing the segment A and the segment B. The polymer may contain a further segment having a constitution different from the segment A and the segment B, as long as the polymer contains the segment A and the segment B.

(Segment A of polymer)

The segment A has a glass transition temperature of 25°C or less. The glass transition temperature of the segment A is preferably 0°C or less, more preferably -5°C or less, and further preferably -10°C or less. Because the first binder for a non-aqueous electrolyte battery contains the polymer containing the segment A having a glass transition temperature, an electrode material layer having excellent softness can be formed.

The glass transition temperature can be determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The heat of fusion of the segment A is preferably less than 5 J/g, more preferably less than 3 J/g, and further preferably less than 2 J/g, from the viewpoint of being able to further improve the softness of the electrode material layer.

The heat of fusion can be calculated from the magnitude of the melting peak ($\Delta H$) of an endothermic curve obtained by raising the temperature of a sample at a rate of 10°C/min from 30°C to 220°C using a differential scanning calorimeter (DSC). When the polymer does not exhibit a clear melting peak, the polymer has no heat of fusion, that is, the heat of fusion of the polymer is 0 J/g.

The segment A may be a segment that does not exhibit a clear melting point.

The segment A preferably contains a fluorine-containing monomer unit, from the viewpoint of being able to improve the electrolytic solution resistance of the electrode material layer. The fluorine-containing monomer capable of constituting the segment A is not limited, as long as it is a monomer containing a fluorine atom, and examples thereof include vinylidene fluoride [VdF], trifluoroethylene, tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, vinyl fluoride, a monomer that gives a repeating unit represented by the general formula (b1) described later, and a monomer that gives a repeating unit represented by the general formula (b2) described later.

The content of the fluorine-containing monomer unit in the segment A is preferably 50 mol% or more, more preferably 90 mol% or more, further preferably 99 mol% or more, preferably 100 mol% or less, and may be 100 mol%, based on all monomer units constituting the segment A.

The segment A may further contain a non-fluorine-containing monomer unit. Examples of the non-fluorine-containing monomer include ethylene, propylene, and alkylvinyl ether. The content of the non-fluorine-containing monomer unit is preferably 0 to 50 mol%, more preferably 0 to 10 mol%, further preferably 0 to 1 mol%, and may be 0 mol%, based on all monomer units constituting the segment A.

The segment A may further contain a unit based on a monomer having a reactive group such as a cyano group, a carboxyl group, an alkoxycarbonyl group, I, Br, -CH$_2$OH, or a carbon-carbon double bond. The content of the unit based on the monomer having a reactive group is preferably 0 to 50 mol%, more preferably 0 to 10 mol%, further preferably 0 to 1 mol%, and may be 0 mol%, based on all monomer units constituting the segment A.

In the present disclosure, the content of each monomer unit can be measured by an NMR method.

The segment A preferably contains at least a VdF unit or TFE unit, and more preferably contains at least a VdF unit as the fluorine-containing monomer unit. When the segment A contains a VdF unit, the glass transition temperature of the segment A can be easily adjusted to the desired range and the softness of the electrode material layer can be further improved. In addition, when the segment A contains a VdF unit, the solvent solubility of the binder in a solvent such as N-methyl-2-pyrrolidone or N,N-dimethylformamide can be improved.

The content of the VdF unit in the segment A is preferably 99 to 15 mol%, more preferably 94 mol% or less, further preferably 88 mol% or less, further more preferably 82 mol% or less, particularly preferably 80 mol% or less, and more preferably 22 mol% or more, further preferably 50 mol% or more, further more preferably 60 mol% or more, and particularly preferably 70 mol% or more, based on all monomer units constituting the segment A.

The segment A more preferably contains at least one selected from the group consisting of a VdF unit and repeating units represented by any of the following formulas, from the viewpoint of further improving the softness of the electrode material layer and further improving the solvent solubility of the binder in a solvent such as N-methyl-2-pyrrolidone or N,N-dimethylformamide.

Formula:

$$-CF_2-CF[-CF_3]-$$

General formula (b1): $-CH_2-CFRf^1-$

In the formula, Rf$^1$ is a linear or branched fluorinated alkyl group or fluorinated alkoxy group having 1 to 12 carbon atoms, and, when the number of carbon atoms is 2 or more, optionally includes oxygen atom between carbon atoms thereof.

General formula (b2): $-CHF-CHRf^2-$

In the formula, Rf$^2$ is a linear or branched fluorinated alkyl group or fluorinated alkoxy group having 1 to 12 carbon atoms, and, when the number of carbon atoms is 2 or more, optionally includes oxygen atom between carbon atoms thereof.

The content of at least one unit selected from the group consisting of repeating units represented by any of the above formulas in the segment A is preferably 1 to 85 mol%, more preferably 6 mol% or more, further preferably 12 mol% or more, further more preferably 18 mol% or more, particularly preferably 20 mol% or more, and more preferably 78 mol% or less, further preferably 50 mol% or less, further more preferably 40 mol% or less, particularly preferably 30 mol% or less, based on all monomer units constituting the segment A.

The repeating unit represented by the formula: $-CF_2-CF[-CF_3]-$ is a repeating unit based on hexafluoropropylene. Thus, in one embodiment, the segment A contains a VdF unit and hexafluoropropylene unit.

In the general formula (b1):$-CH_2-CFRf^1-$, Rf$^1$ is a linear or branched fluorinated alkyl group having 1 to 12 carbon atoms or a linear or branched fluorinated alkoxy group having 1 to 12 carbon atoms. The fluorinated alkyl group and the fluorinated alkoxy group can each include oxygen atom (-O-) between carbon atoms thereof when the number of carbon atoms is 2 or more.

The fluorinated alkyl group of $Rf^1$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^1$ may have a hydrogen atom replaced by a substituent other than a fluorine atom, and preferably does not include a substituent other than a fluorine atom.

The fluorinated alkoxy group of $Rf^1$ may be a partially fluorinated alkoxy group in which a part of the hydrogen atoms bonded to the carbon atoms is replaced by a fluorine atom in some embodiments, and may be a perfluorinated alkoxy group in which all of the hydrogen atoms bonded to the carbon atoms are replaced by fluorine atoms in other embodiments. In addition, the fluorinated alkoxy group of $Rf^1$ may have a hydrogen atom replaced by a substituent other than a fluorine atom, and preferably does not include a substituent other than a fluorine atom.

The number of carbon atoms of $Rf^1$ is preferably 1 to 10, more preferably 1 to 6, further preferably 1 to 4, and particularly preferably 1.

$Rf^1$ is preferably a group represented by the general formula:

$$- (Rf^{11})_m-(O)_p-(Rf^{12}-O)_n-Rf^{13}$$

wherein $Rf^{11}$ and $Rf^{12}$ are each independently a linear or branched fluorinated alkylene group having 1 to 4 carbon atoms, $Rf^{13}$ is a linear or branched fluorinated alkyl group having 1 to 4 carbon atoms, p is 0 or 1, m is an integer of 0 to 4, and n is an integer of 0 to 4.

The fluorinated alkylene group of each of $Rf^{11}$ and $Rf^{12}$ may be a partially fluorinated alkylene group in which a part of the hydrogen atoms bonded to the carbon atoms is replaced by a fluorine atom in some embodiments, and may be a perfluorinated alkylene group in which all of the hydrogen atoms bonded to the carbon atoms are replaced by fluorine atoms in other embodiments. In addition, the fluorinated alkylene group of each of $Rf^{11}$ and $Rf^{12}$ may have a hydrogen atom replaced by a substituent other than a fluorine atom, and preferably does not include a substituent other than a fluorine atom. $Rf^{11}$ and $Rf^{12}$ may each, at each occurrence, be the same or different.

Examples of the fluorinated alkylene group of $Rf^{11}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 2 carbon atoms is preferable, and $-CF_2-$ is more preferable.

Examples of the fluorinated alkylene group of $Rf^{12}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 3 carbon atoms is preferable, and $-CF_2-$, $-CF_2CF_2-$, $-CF_2-CF_2-CF_2-$, $-CF(CF_3)-CF_2-$, or $-CF_2-CF(CF_3)-$ is more preferable.

The fluorinated alkyl group of $Rf^{13}$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^{13}$ may have a hydrogen atom replaced by a substituent other than a fluorine atom, and preferably does not include a substituent other than a fluorine atom (for example, a reactive functional group such as $-CN$, $-I$, or $-Br$).

Examples of the fluorinated alkyl group of $Rf^{13}$ include $-CH_2F$, $-CHF_2$, $-CF_3$, $-CH_2-CH_2F$, $-CH_2-CHF_2$, $-CH_2-CF_3$, $-CHF-CH_2F$, $-CHF-CHF_2$, $-CHF-CF_3$, $-CF_2-CH_2F$, $-CF_2-CHF_2$, $-CF_2-CF_3$, $-CH_2-CF_2-CH_2F$, $-CHF-CF_2-CH_2F$, $-CF_2-CF_2-CH_2F$, $-CF(CF_3)-CH_2F$, $-CH_2-CF_2-CHF_2$, $-CHF-CF_2-CHF_2$, $-CF_2-CF_2-CHF_2$, $-CF(CF_3)-CHF_2$, $-CH_2-CF_2-CF_3$, $-CHF-CF_2-CF_3$, $-CF_2-CF_2-CF_3$, $-CF(CF_3)-CF_3$, $-CH_2-CF_2-CF_2-CF_3$, $-CHF-CF_2-CF_2-CF_3$, $-CF_2-CF_2-CF_2-CF_3$, $-CH(CF_3)-CF_2-CF_3$, $-CF(CF_3)-CF_2-CF_3$, and $-C(CF_3)_2-CF_3$, and among these, $-CF_3$, $-CHF-CF_3$, $-CF_2-CHF_2$, $-CF_2-CF_3$, $-CF_2-CF_2-CF_3$, $-CF(CF_3)-CF_3$, $-CF_2-CF_2-CF_2-CF_3$, $-CH(CF_3)-CF_2-CF_3$, or $-CF(CF_3)-CF_2-CF_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit represented by the general formula (b1) is preferably

$$-CH_2-CF[-CF_3]-$$

$-CH_2-CF[-CF_2CF_3]-$,

$-CH_2-CF[-CF_2CF_2CF_3]-$,

$-CH_2-CF[-CF_2CF_2CF_2CF_3]-$,

$-CH_2-CF[-CF_2-O-CF(CF_3)-CF_2-O-CHF-CF_3]-$

$-CH_2-CF[-CF_2-O-CF(CF_3)-CF_2-O-CF_2-CF_3]-$

$-CH_2-CF[-CF_2-O-CF(CF_3)-CF_2-O-CF(CF_3)-CF_3]-$

$-CH_2-CF[-CF_2-O-CF(CF_3)-CF_2-O-CH(CF_3)-CF_2-CF_3]-$

$-CH_2-CF[-CF_2-O-CF(CF_3)-CF_2-O-CF(CF_3)-CF_2-CF_3]-$

$-CH_2-CF[-OCF_2OCF_3]-$,

$-CH_2-CF[-OCF_2CF_2CF_2OCF_3]-$,

$-CH_2-CF[-CF_2OCF_2OCF_3]-$,

$-CH_2-CF[-CF_2OCF_2CF_2CF_2OCF_3]-$, or

$-CH_2-CF[-O-CF_2-CF_3]-$, and

more preferably

$-CH_2-CF[-CF_3]-$ or

$-CH_2-CF[-CF_2-O-CF(CF_3)-CF_2-O-CHF-CF_3]-$.

In the general formula (b2):$-CHF-CHRf^2-$, $Rf^2$ is a linear or branched fluorinated alkyl group having 1 to 12 carbon atoms or a linear or branched fluorinated alkoxy group having 1 to 12 carbon atoms. The fluorinated alkyl group and the fluorinated alkoxy group can each include oxygen atom (-O-) between carbon atoms thereof when the number of carbon atoms is 2 or more.

The fluorinated alkyl group of $Rf^2$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^2$ may have a hydrogen atom replaced by a substituent other than a fluorine atom, and preferably does not include a substituent other than a fluorine atom.

The fluorinated alkoxy group of $Rf^2$ may be a partially fluorinated alkoxy group in which a part of the hydrogen atoms bonded to the carbon atoms is replaced by a fluorine atom in some embodiments, and may be a perfluorinated alkoxy group in which all of the hydrogen atoms bonded to the carbon atoms are replaced by fluorine atoms in other embodiments. In addition, the fluorinated alkoxy group of $Rf^2$ may have a hydrogen atom replaced by a substituent other than a fluorine atom, and preferably does not include a substituent other than a fluorine atom.

The number of carbon atoms of $Rf^2$ is preferably 1 to 10, more preferably 1 to 6, further preferably 1 to 4, and particularly preferably 1.

$Rf^2$ is preferably a group represented by the general formula:

$$-(Rf^{21})_m-(O)_p-(Rf^{22}-O)_n-Rf^{23}$$

wherein $Rf^{21}$ and $Rf^{22}$ are each independently a linear or branched fluorinated alkylene group having 1 to 4 carbon atoms, $Rf^{23}$ is a linear or branched fluorinated alkyl group having 1 to 4 carbon atoms, p is 0 or 1, m is an integer of 0 to 4, and n is an integer of 0 to 4.

The fluorinated alkylene group of each of $Rf^{21}$ and $Rf^{22}$ may be a partially fluorinated alkylene group in which a part of the hydrogen atoms bonded to the carbon atoms is replaced by a fluorine atom in some embodiments, and may be a perfluorinated alkylene group in which all of the hydrogen atoms bonded to the carbon atoms are replaced by fluorine atoms in other embodiments. In addition, the fluorinated alkylene group of each of $Rf^{21}$ and $Rf^{22}$ may have a hydrogen atom replaced by a substituent other than a fluorine atom, and preferably does not include a substituent other than a fluorine atom. $Rf^{21}$ and $Rf^{22}$ may each, at each occurrence, be the same or different.

Examples of the fluorinated alkylene group of $Rf^{21}$ include -CHF-, -CF$_2$-, -CH$_2$-CF$_2$-, -CHF-CF$_2$-, -CF$_2$-CF$_2$-, -CF(CF$_3$)-, -CH$_2$-CF$_2$-CF$_2$-, -CHF-CF$_2$-CF$_2$-, -CF$_2$-CF$_2$-CF$_2$-, -CF(CF$_3$)-CF$_2$-, -CF$_2$-CF(CF$_3$)-, -C(CF$_3$)$_2$-, -CH$_2$-CF$_2$-CF$_2$-CF$_2$-, -CHF-CF$_2$-CF$_2$-CF$_2$-, -CF$_2$-CF$_2$-CF$_2$-CF$_2$-, -CH(CF$_3$)-CF$_2$-CF$_2$-, -CF(CF$_3$)-CF$_2$-CF$_2$-, and -C(CF$_3$)$_2$-CF$_2$-, and among these, a perfluorinated alkylene group having 1 or 2 carbon atoms is preferable, and -CF$_2$- is more preferable.

Examples of the fluorinated alkylene group of $Rf^{22}$ include -CHF-, -CF$_2$-, -CH$_2$-CF$_2$-, -CHF-CF$_2$-, -CF$_2$-CF$_2$-, -CF(CF$_3$)-, -CH$_2$-CF$_2$-CF$_2$-, -CHF-CF$_2$-CF$_2$-, -CF$_2$-CF$_2$-CF$_2$-, -CF(CF$_3$)-CF$_2$-, -CF$_2$-CF(CF$_3$)-, -C(CF$_3$)$_2$-, -CH$_2$-CF$_2$-CF$_2$-CF$_2$-, -CHF-CF$_2$-CF$_2$-CF$_2$-, -CF$_2$-CF$_2$-CF$_2$-CF$_2$-, -CH(CF$_3$)-CF$_2$-CF$_2$-, -CF(CF$_3$)-CF$_2$-CF$_2$-, and -C(CF$_3$)$_2$-CF$_2$-, and among these, a perfluorinated alkylene group having 1 or 3 carbon atoms is preferable, and -CF$_2$-, -CF$_2$CF$_2$-, -CF$_2$-CF$_2$-CF$_2$-, -CF(CF$_3$)-CF$_2$-, or -CF$_2$-CF(CF$_3$)- is more preferable.

The fluorinated alkyl group of $Rf^{23}$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^{23}$ may have a hydrogen atom replaced by a substituent other than a fluorine atom, and preferably does not include a substituent other than a fluorine atom (for example, a reactive functional group such as -CN, -I, or -Br).

Examples of the fluorinated alkyl group of $Rf^{23}$ include -CH$_2$F, -CHF$_2$, -CF$_3$, -CH$_2$-CH$_2$F, -CH$_2$-CHF$_2$, -CH$_2$-CF$_3$, -CHF-CH$_2$F, - CHF-CHF$_2$, -CHF-CF$_3$, -CF$_2$-CH$_2$F, -CF$_2$-CHF$_2$, -CF$_2$-CF$_3$, -CH$_2$-CF$_2$-CH$_2$F, -CHF-CF$_2$-CH$_2$F, -CF$_2$-CF$_2$-CH$_2$F, -CF(CF$_3$)-CH$_2$F, -CH$_2$-CF$_2$-CHF$_2$, -CHF-CF$_2$-CHF$_2$, -CF$_2$-CF$_2$-CHF$_2$, -CF(CF$_3$)-CHF$_2$, -CH$_2$-CF$_2$-CF$_3$, -CHF-CF$_2$-CF$_3$, -CF$_2$-CF$_2$-CF$_3$, -CF(CF$_3$)-CF$_3$, -CH$_2$-CF$_2$-CF$_2$-CF$_3$, -CHF-CF$_2$-CF$_2$-CF$_3$, - CF$_2$-CF$_2$-CF$_2$-CF$_3$, -CH(CF$_3$)-CF$_2$-CF$_3$, -CF(CF$_3$)-CF$_2$-CF$_3$, and -C(CF$_3$)$_2$-CF$_3$, and among these, -CF$_3$, -CHF-CF$_3$, -CF$_2$-CHF$_2$, -CF$_2$-CF$_3$, -CF$_2$-CF$_2$-CF$_3$, -CF(CF$_3$)-CF$_3$, -CF$_2$-CF$_2$-CF$_2$-CF$_3$, -CH(CF$_3$)-CF$_2$-CF$_3$, or - CF(CF$_3$)-CF$_2$-CF$_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit represented by the general formula b2) is preferably

-CHF-CH[-CF$_3$]-,

-CHF-CH[-CF$_2$CF$_3$]-,

-CHF-CH[-CF$_2$CF$_2$CF$_3$]-, or

-CHF-CH[-CF$_2$CF$_2$CF$_2$CF$_3$]-, and

more preferably

-CHF-CH[-CF$_3$]-.

Among these, the segment A preferably contains a VdF unit and a 2,3,3,3-tetrafluoropropene unit. When the segment A contains a VdF unit and a 2,3,3,3-tetrafluoropropene unit, the softness of the electrode material layer can be further improved and an electrode mixture having excellent viscosity stability can be obtained. In addition, the solvent solubility of the binder in a solvent such as N-methyl-2-pyrrolidone or N,N-dimethylformamide can be improved.

The content of the 2,3,3,3-tetrafluoropropene unit in the segment A is preferably 1 to 85 mol%, more preferably 6 mol% or more, further preferably 12 mol% or more, further more preferably 18 mol% or more, particularly preferably 20 mol% or more, and more preferably 78 mol% or less, further preferably 50 mol% or less, further more preferably 40 mol% or less, particularly preferably 30 mol% or less, based on all monomer units constituting the segment A.

In one embodiment, the segment A can be formed of a 2,3,3,3-tetrafluoropropene/VdF copolymer or a 2,3,3,3-tetrafluoropropene/VdF/TFE copolymer.

In the 2,3,3,3-tetrafluoropropene/VdF copolymer, the formulation of the 2,3,3,3-tetrafluoropropene unit/the VdF unit (mol%) is preferably (18 to 40)/(82 to 60), and more preferably (20 to 30)/(80 to 70).

In the 2,3,3,3-tetrafluoropropene/VdF/TFE copolymer, the formulation of the 2,3,3,3-tetrafluoropropene unit/the VdF unit/TFE unit (mol%) is preferably (18 to 40)/(81 to 25)/(1 to 35), and more preferably (20 to 40)/(75 to 30)/(5 to 30).

In one embodiment, the segment A contains a 2,3,3,3-tetrafluoropropene unit and a VdF unit, and the content of the monomer unit other than the 2,3,3,3-tetrafluoropropene unit and the VdF unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the segment A. The content of the 2,3,3,3-tetrafluoropropene unit and the content of the VdF unit may be within the above range.

(Segment B of polymer)

The segment B has a melting point of 50°C or more. The melting point of the segment B is preferably 90°C or more, more preferably 140°C or more, and preferably 240°C or less, more preferably 220°C or less, further preferably 200°C or less. Because the first binder for a non-aqueous electrolyte battery contains a polymer containing the segment B having a melting point in addition to the segment A having a glass transition temperature, an electrode material layer having not only excellent softness but also excellent toughness can be formed.

The melting point can be determined as the temperature at the peak of an endothermic curve obtained by raising the temperature of a sample at a rate of 10°C/min from 30°C to 220°C using a differential scanning calorimeter (DSC).

The melting point of the segment B is usually the same as the melting point of the first polymer. Therefore, by measuring the melting point of the first polymer, the melting point of the segment B in the first polymer can be grasped.

The heat of fusion of the segment B is preferably 5 J/g or more, more preferably 10 J/g or more, further preferably 30 J/g or more, further more preferably 35 J/g or more, and preferably 90 J/g or less, more preferably 60 g/g or less, further preferably 55 J/g or less, from the viewpoint of further improving the softness and toughness of the electrode material layer.

The heat of fusion can be calculated from the magnitude of the melting peak ($\Delta H$) of an endothermic curve obtained by raising the temperature of a sample at a rate of 10°C /min from 30°C to 220°C using a differential scanning calorimeter (DSC).

The segment B preferably contains a fluorine-containing monomer unit, from the viewpoint of being able to improve the oxidation resistance and electrolytic solution resistance of the electrode material layer. The fluorine-containing monomer capable of constituting the segment B is not limited, as long as it is a monomer containing a fluorine atom, and examples thereof include vinylidene fluoride [VdF], trifluoroethylene, tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

The content of the fluorine-containing monomer unit in the segment B is preferably 50 mol% or more, more preferably 90 mol% or more, further preferably 99 mol% or more, and preferably 100 mol% or less, based on all monomer units constituting the segment B.

The segment B may further contain a non-fluorine-containing monomer unit. Examples of the non-fluorine-containing monomer include ethylene, propylene, and alkylvinyl ether. The content of the non-fluorine-containing monomer unit is preferably 0 to 50 mol%, more preferably 0 to 10 mol%, further preferably 0 to 1 mol%, and may be 0 mol%, based on all monomer units constituting the segment B.

The segment B may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group.

Examples of the monomer having a polar group include a hydroxyalkyl (meth)acrylate such as hydroxyethyl acrylate or 2-hydroxypropyl acrylate; an unsaturated monobasic acid such as (meth)acrylic acid, crotonic acid, vinylacetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

The segment B preferably contains at least a VdF unit as the fluorine-containing monomer unit. When the segment B contains a VdF unit, the melting point of the segment B can be easily adjusted to the desired range, the toughness of the electrode material layer can be further improved, and an electrode material layer having excellent electrolytic solution resistance can be formed. In addition, when the segment B contains a VdF unit, the solvent solubility of the binder in a solvent such as N-methyl-2-pyrrolidone or N,N-dimethylformamide can be improved.

The segment B may further contain a further monomer unit other than the VdF unit, in addition to the VdF unit. The further monomer may be any of a fluorine-containing monomer and a non-fluorine-containing monomer, and is preferably a fluorine-containing monomer (provided that, excluding trifluoroethylene) or a non-fluorine-containing monomer.

Examples of the fluorine-containing monomer capable of constituting the segment B together with VdF include TFE, hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

Examples of non-fluorine-containing monomer capable of constituting the segment B together with VdF include ethylene and propylene.

The segment B may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group, in addition to the VdF unit. The monomers having a polar group are as exemplified above.

Among these, the further monomer capable of constituting the segment B together with VdF is preferably at least one selected from the group consisting of TFE, hexafluoropropylene, 2,3,3,3-tetrafluoropropene, and (meth)acrylic acid.

The content of the VdF unit in the segment B is preferably 97 mol% or more, more preferably more than 99 mol%, further preferably 99.5 mol% or more, and may be 100 mol% or less, based on all monomer units constituting the segment B, from the viewpoint of being able to further improve the toughness and electrolytic solution resistance of the electrode material layer, and further improving the solvent solubility of the binder in a solvent such as N-methyl-2-pyrrolidone or N,N-dimethylformamide.

The content of the further monomer unit other than the VdF unit in the segment B is preferably 3 mol% or less, more preferably less than 1 mol%, further preferably 0.5 mol% or less, and may be 0 mol% or more, based on all monomer units constituting the segment B, from the viewpoint of being able to further improve the toughness and electrolytic solution resistance of the electrode material layer, and further improving the solvent solubility of the binder in a solvent such as N-methyl-2-pyrrolidone or N,N-dimethylformamide.

In one embodiment, the segment B can be formed of a VdF homopolymer containing only a VdF unit, or a copolymer containing a VdF unit and at least one further monomer unit selected from the group consisting of TFE unit, hexafluoropropylene unit, a 2,3,3,3-tetrafluoropropene unit, and a (meth)acrylic acid unit.

In the copolymer containing a VdF unit and a further monomer unit, the formulation of the VdF unit/the further monomer unit (mol%) is preferably (97.0 to 99.9)/(3.0 to 0.1).

The polymer contained in the first binder for a non-aqueous electrolyte battery may contain a further segment C having a constitution different from the segment A and the segment B, as long as the polymer contains the segment A and the segment B.

Examples of the polymer contained in the first binder for a non-aqueous electrolyte battery include block copolymers containing a chain structure represented by any of the following general formulas.

General formula: A-B
General formula: A-B-A
General formula: B-A-B
General formula: A-B-C
General formula: B-A-C

In the formula, A represents the segment A, B represents the segment B, and C represents the segment C.

The polymer contained in the first binder for a non-aqueous electrolyte battery preferably contains a chain structure represented by the general formula (1) or the general formula (2), from the viewpoint of being able to form an electrode material layer having superior softness and toughness, and easy production.

General formula (1): A-B-A
General formula (2): B-A-B

In the formula, A represents the segment A, and B represents the segment B.

For the polymer contained in the first binder for a non-aqueous electrolyte battery, the mass ratio of the segment A to the segment B, (A/B) is preferably 40/60 to 95/5, more preferably 50/50 or more, further preferably 60/40 or more, and more preferably 90/10 or less, from the viewpoint of the balance between excellent softness and excellent toughness.

The number-average molecular weight (in terms of polystyrene) of the polymer contained in the first binder for a non-aqueous electrolyte battery is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The above number-average molecular weight can be measured by gel permeation chromatography (GPC) using dimethylformamide as a solvent.

The weight average molecular weight (in terms of polystyrene) of the polymer contained in the first binder for a non-aqueous electrolyte battery is preferably 50,000 to 3,000,000, more preferably 80,000 or more, further preferably 100,000 or more, further more preferably 200,000 or more, particularly preferably 500,000 or more, and more preferably 2,400,000 or less, further preferably 2,200,000 or less, particularly preferably 2,000,000 or less. The above weight average molecular weight can be measured by gel permeation chromatography (GPC) using dimethylformamide as a solvent.

The polymer contained in the first binder for a non-aqueous electrolyte battery can be produced by a production method such as:

(1) a method in which monomers capable of constituting the segment B are polymerized in the presence of a bromine compound or an iodine compound as a chain transfer agent to prepare a polymer forming the segment B, and then monomers capable of constituting the segment A are polymerized in the presence of the polymer forming the segment B to prepare a polymer forming the segment A, or

(2) a method in which monomers capable of constituting the segment A are polymerized in the presence of a bromine compound or an iodine compound as a chain transfer agent to prepare a polymer forming the segment A, and then monomers capable of constituting the segment B are polymerized in the presence of the polymer forming the segment A to prepare a polymer forming the segment B.

When the method (1) is used, a polymer in which a segment A is bonded to both ends of a polymer chain forming the segment B, that is, a polymer containing a chain structure represented by the general formula (1): A-B-A can be obtained.

When the method (2) is used, a polymer in which a segment B is bonded to both ends of a polymer chain forming the segment A, that is, a polymer containing a chain structure represented by the general formula (2): B-A-B can be obtained.

In the method (1) and the method (2), a bromine compound or an iodine compound is used as a chain transfer agent. By using a bromine compound or an iodine compound, an iodine atom or a bromine atom is introduced into the end of the polymer chain forming one segment and functions as the binding site with another segment.

Examples of the polymerization method using a bromine compound or an iodine compound include a method in which emulsion polymerization is carried out in a water medium in a substantially oxygen-free state and in the presence of a bromine compound or an iodine compound while applying pressure (iodine transfer polymerization method). Representative examples of the bromine compound or iodine compound to be used include a compound represented by:

general formula:

$$R^8I_xBr_y$$

wherein each of x and y is an integer of 0 to 2 and satisfies $1 \leq x + y \leq 2$, $R^8$ is a saturated or unsaturated fluorohydrocarbon group or chlorofluorohydrocarbon group having 1 to 16 carbon atoms, or a hydrocarbon group having 1 to 3 carbon atoms, and optionally contains oxygen atom.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, a monoiodomonobromo substituent of benzene, a diiodomonobromo substituent, as well as (2-iodoethyl) and (2-bromoethyl) substituents, and these compounds may be used alone, or may be used in combination with each other.

Among these, 1,4-diiodoperfluorobutane, 1,6-diiodoperfluorohexane, or 2-iodoperfluoropropane is preferably used in view of polymerization reactivity, crosslinking reactivity, easy availability, and the like.

In the above production method, polymerization of the monomer is suitably carried out using an emulsion polymerization method. In one embodiment, polymerization of the monomer is carried out in the presence of a polymerization initiator, a surfactant, and a solvent.

Examples of the polymerization initiator include an oil-soluble radical polymerization initiator or a water-soluble radical initiator.

The oil-soluble radical polymerization initiator may be a known oil-soluble peroxide, and representative examples thereof include a dialkyl peroxycarbonate such as diisopropyl peroxydicarbonate and di sec-butyl peroxydicarbonate; a peroxyester such as t-butylperoxyisobutyrate or t-butylperoxypivalate; a dialkyl peroxide such as di-t-butyl peroxide; and a di[perfluoro(or fluorochloro)acyl] peroxide such as di(ω-hydro-dodecafluoroheptanoyl) peroxide, di(ω-hydro-tetradecafluorooctanoyl) peroxide, di(ω-hydro-hexadecafluorononanoyl) peroxide, di(perfluorobutyryl) peroxide, di(perflupareryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, or di(undecachlorodotriacontafluorodocosanoyl) peroxide.

The water-soluble radical polymerization initiator may be a known water-soluble peroxide, and examples thereof include an ammonium salt, a potassium salt, a sodium salt, t-butyl permaleate, and t-butylhydro peroxide of persulfuric acid, perboric acid, perchloric acid, perphosphoric acid, and percarbonic acid. A reducing agent such as a sulfite may be contained in combination, and the amount thereof used may be 0.1 to 20 times with respect to the peroxide.

The amount of the polymerization initiator added is not limited, and the radical polymerization initiator is only required to be added in one portion in an early stage of polymerization, or successively, or continuously, in an amount such that the polymerization rate is not significantly reduced (e.g., several ppm relative to water concentration) or more. The upper limit is in the range such that the polymerization reaction heat can be removed from an apparatus surface.

The surfactant may be a nonionic surfactant, an anionic surfactant, a cationic surfactant, or the like. The amount added (relative to a solvent) is preferably 10 ppm by mass to 20% by mass, more preferably 10 ppm by mass to 10% by mass, further preferably 10 to 5,000 ppm by mass, and particularly preferably 50 to 5,000 ppm by mass.

In addition, a polymerizable emulsifier may be used as the surfactant. The polymerizable emulsifier is not limited, as long as it is a compound having one or more unsaturated bonds and one or more hydrophilic groups, and examples thereof include $CH_2=CFCF_2OCF(CF_3)CF_2OCF(CF_3)COONH_4$, $CH_2=CFCF_2CF(CF_3)OCF_2CF_2COONH_4$, and $CF_2=CFOCF_2CF(CF_3)OCF(CF_3)COONH_4$. The amount added (relative to a solvent) is preferably 10 to 5,000 ppm by mass, and more preferably 50 to 5,000 ppm by mass.

The solvent is preferably a solvent having no chain transfer properties. Examples of the solvent include water, a mixture of water and a water-soluble organic solvent, or a mixture of water and a water-insoluble organic solvent.

In the polymerization of the monomer, the polymerization temperature, the polymerization pressure, and the polymerization time vary depending on the kind of the solvent and the polymerization initiator, and may be -15 to 150°C, an atmospheric pressure to 6.5 MPa, and 1 to 24 hours. When an oil-soluble radical polymerization initiator is used as the polymerization initiator, the polymerization temperature is preferably 30 to 95°C. When a water-soluble radical polymerization initiator is used as the polymerization initiator, the polymerization temperature is preferably 0 to 100°C, and more preferably 10 to 95°C.

When the polymerization of the monomer is carried out by the emulsion polymerization method, an aqueous dispersion containing the polymer is obtained. In the above production method, the polymer in the aqueous dispersion can be coagulated, washed with water, dehydrated, and dried to obtain polymer powder. Coagulation can be carried out by adding an inorganic salt such as aluminum sulfate or an inorganic acid to the dispersion, applying a mechanical shear force to the dispersion, or freezing the dispersion.

The polymer contained in the first binder for a non-aqueous electrolyte battery can also be produced using at least 2,3,3,3-tetrafluoropropene as the monomer in accordance with the methods described in Japanese Patent Laid-Open No. 53-3495 and Japanese Patent Publication No. 61-49327.

2. Second binder for a non-aqueous electrolyte battery

The second binder for a non-aqueous electrolyte battery of the present disclosure contains a polymer having a glass transition temperature and a melting point, containing a 2,3,3,3-tetrafluoropropene unit, and having an extraction in tetrahydrofuran at 25°C of 5% by mass or less.

The glass transition temperature of the polymer contained in the second binder for a non-aqueous electrolyte battery is preferably 25°C or less, more preferably 0°C or less, further preferably -5°C or less, further more preferably -10°C or less, and the lower limit may be, but is not limited to, - 40°C or more. Because the second binder for a non-aqueous electrolyte battery contains a polymer having a glass transition temperature, an electrode material layer having excellent softness can be formed.

The glass transition temperature can be determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The melting point of the polymer contained in the second binder for a non-aqueous electrolyte battery is preferably 50°C or more, more preferably 90°C or more, further preferably 140°C or more, and preferably 240°C or less, more preferably 220°C or less, further preferably 200°C or less. Because the second binder for a non-aqueous electrolyte battery contains a polymer having a melting point in addition to a glass transition temperature, an electrode material layer having not only excellent softness but also excellent toughness can be formed.

The melting point can be determined as the temperature at the peak of an endothermic curve obtained by raising the temperature of a sample at a rate of 10°C/min from 30°C to 220°C using a differential scanning calorimeter (DSC).

The extraction in tetrahydrofuran of the polymer contained in the second binder for a non-aqueous electrolyte battery is 5% by mass or less, preferably 4% by mass or less, and more preferably 3% by mass or less. Because the second binder for a non-aqueous electrolyte battery contains a polymer having an extraction in tetrahydrofuran within the above numerical value range, an electrode material layer having not only excellent softness but also excellent toughness can be formed. The lower limit of the extraction in tetrahydrofuran is not limited, and may be 1% by mass or more or 2% by mass or more.

The extraction in tetrahydrofuran can be measured by a method involving immersing the polymer in tetrahydrofuran at 25°C for 24 hours and drying the filtered solution portion.

The polymer contained in the second binder for a non-aqueous electrolyte battery contains a 2,3,3,3-tetrafluoropropene unit. Because the second binder for a non-aqueous electrolyte battery contains a 2,3,3,3-tetrafluoropropene unit, the solvent solubility in a solvent such as N-methyl-2-pyrrolidone or N,N-dimethylformamide can be imparted to the binder, an electrode material layer having excellent softness and toughness can be formed, an electrode mixture having excellent viscosity stability can be further obtained, and an electrode material layer having excellent electrolytic solution resistance can be formed.

The polymer contained in the second binder for a non-aqueous electrolyte battery preferably contains a fluorine-containing monomer unit (provided that, excluding the 2,3,3,3-tetrafluoropropene unit). By introducing a fluorine-containing monomer unit into the polymer, the glass transition temperature and melting point of the polymer can be easily adjusted, an electrode material layer having superior softness and toughness can be formed, an electrode mixture having superior viscosity stability can be further obtained, and an electrode material layer having superior electrolytic solution resistance can be formed.

The fluorine-containing monomer capable of constituting the polymer contained in the second binder for a non-aqueous electrolyte battery is not limited, as long as it is a monomer other than 2,3,3,3-tetrafluoropropene and the monomer contains a fluorine atom, and examples thereof include vinylidene fluoride [VdF], trifluoroethylene, tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

The fluorine-containing monomer capable of constituting the polymer contained in the second binder for a non-aqueous electrolyte battery is preferably at least one selected from the group consisting of VdF, TFE, hexafluoropropylene, perfluoro(methylvinyl ether), perfluoro(ethylvinyl ether), perfluoro(propylvinyl ether), and chlorotrifluoroethylene, more preferably at least one selected from the group consisting of VdF and TFE, and is further preferably VdF.

When the polymer contained in the second binder for a non-aqueous electrolyte battery contains a VdF unit as the fluorine-containing monomer unit, the solvent solubility of the binder in a solvent such as N-methyl-2-pyrrolidone or N,N-dimethylformamide is further improved, an electrode material layer having superior softness and toughness can be formed by using the second binder for a non-aqueous electrolyte battery, an electrode mixture having superior viscosity stability can be further obtained, and an electrode material layer having superior electrolytic solution resistance can be formed.

The content of the 2,3,3,3-tetrafluoropropene unit in the polymer contained in the second binder for a non-aqueous electrolyte battery is preferably 1 to 65 mol%, more preferably 5 mol% or more, further preferably 9 mol% or more, further more preferably 12 mol% or more, particularly preferably 14 mol% or more, and more preferably 62 mol% or less, further preferably 40 mol% or less, further more preferably 32 mol% or less, particularly preferably 24 mol% or less, based on all monomer units constituting the polymer.

The content of the fluorine-containing monomer unit in the polymer contained in the second binder for a non-aqueous electrolyte battery is preferably 99 to 35 mol%, more preferably 95 mol% or less, further preferably 91 mol% or less, further more preferably 88 mol% or less, particularly preferably 86 mol% or less, and more preferably 38 mol% or more, further preferably 60 mol% or more, further more preferably 68 mol% or more, particularly preferably 76 mol% or more, based on all monomer units constituting the polymer.

The content of the VdF unit in the polymer contained in the second binder for a non-aqueous electrolyte battery is preferably 99 to 35 mol%, more preferably 95 mol% or less, further preferably 91 mol% or less, further more preferably 88 mol% or less, particularly preferably 86 mol% or less, and more preferably 38 mol% or more, further preferably 60 mol% or more, further more preferably 68 mol% or more, particularly preferably 76 mol% or more, based on all monomer units constituting the polymer.

The polymer contained in the second binder for a non-aqueous electrolyte battery may further contain a non-fluorine-containing monomer unit. Examples of the non-fluorine-containing monomer include ethylene, propylene, and alkylvinyl ether. The content of the non-fluorine-containing monomer unit is preferably 0 to 40 mol%, more preferably 0 to 8 mol%, further preferably 0 to 1 mol%, and may be 0 mol%, based on all monomer units constituting the polymer.

The polymer contained in the second binder for a non-aqueous electrolyte battery may further contain a unit based on a monomer having a reactive group such as a cyano group, a carboxyl group, an alkoxycarbonyl group, I, Br, -CH$_2$OH, or a carbon-carbon double bond. The content of the unit based on the monomer having a reactive group is preferably 0 to 10 mol%, more preferably 0 to 2 mol%, further preferably 0 to 1 mol%, and may be 0 mol%, based on all monomer units constituting the polymer.

The polymer contained in the second binder for a non-aqueous electrolyte battery may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group.

Examples of the monomer having a polar group include a hydroxyalkyl (meth)acrylate such as hydroxyethyl acrylate or 2-hydroxypropyl acrylate; an unsaturated monobasic acid such as (meth)acrylic acid, crotonic acid, vinyl acetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxy alkyl ether such as vinyl carboxymethyl ether or vinyl carboxyethyl ether; a carboxy alkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

The content of the unit based on the monomer having a polar group is preferably 0 to 10 mol%, more preferably 0 to 2 mol%, further preferably 0 to 1 mol%, and may be 0 mol%, based on all monomer units constituting the polymer.

In one embodiment, the polymer contained in the second binder for a non-aqueous electrolyte battery contains a 2,3,3,3-tetrafluoropropene unit and a fluorine-containing monomer unit (provided that, excluding the 2,3,3,3-tetrafluoropropene unit), and the content of the monomer unit other than the 2,3,3,3-tetrafluoropropene unit and the fluorine-containing monomer unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the polymer. The content of the 2,3,3,3-tetrafluoropropene unit and the content of the fluorine-containing monomer unit may be within the above range.

In one embodiment, the polymer contained in the second binder for a non-aqueous electrolyte battery contains a 2,3,3,3-tetrafluoropropene unit and a VdF unit, and the content of the monomer unit other than the 2,3,3,3-tetrafluoropropene unit and the VdF unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the polymer. The content of the 2,3,3,3-tetrafluoropropene unit and the content of the VdF unit may be within the above range.

The number average molecular weight, in terms of polystyrene, of the polymer contained in the second binder for a non-aqueous electrolyte battery is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The weight average molecular weight (in terms of polystyrene) of the polymer contained in the second binder for a non-aqueous electrolyte battery is preferably 50,000 to 3,000,000, more preferably 80,000 or more, further preferably 100,000 or more, further more preferably 200,000 or more, particularly preferably 500,000 or more, and more preferably 2,400,000 or less, further preferably 2,200,000 or less, particularly preferably 2,000,000 or less. The above weight average molecular weight can be measured by gel permeation chromatography (GPC) using dimethylformamide as a solvent.

The heat of fusion of the polymer contained in the second binder for a non-aqueous electrolyte battery is preferably 1 J/g or more, more preferably 3 J/g or more, further preferably 5 J/g or more, further more preferably 8 J/g or more, and preferably 40 J/g or less, more preferably 30 g/g or less, further preferably 20 J/g or less.

In one embodiment, the polymer contained in the second binder for a non-aqueous electrolyte battery contains two or more segments. By constituting the polymer using two or more segments, a glass transition temperature and a melting point can be easily imparted to the polymer, the glass transition temperature and melting point of the polymer can be easily adjusted, and the softness and toughness of the electrode material layer can be further improved.

When the polymer contained in the second binder for a non-aqueous electrolyte battery contains two or more segments, the constitution of each segment may be the same as the constitution of each segment of the polymer contained in the first binder for a non-aqueous electrolyte battery. That is, the polymer contained in the second binder for a non-aqueous electrolyte battery can contain the segment A and the segment B as in the polymer contained in the first binder for a non-aqueous electrolyte battery, and may have the same constitution as the polymer contained in the first binder for a non-aqueous electrolyte battery.

The polymer contained in the second binder for a non-aqueous electrolyte battery can be produced by, for example, the method described above as the method for producing the polymer contained in the first binder for a non-aqueous electrolyte battery.

The first binder for a non-aqueous electrolyte battery and the second binder for a non-aqueous electrolyte battery (hereinafter simply referred to as the "binder for a non-aqueous electrolyte battery") may contain a further polymer other than the above polymer. Examples of the further polymer include a fluoropolymer, polymethacrylate, polymethyl methacrylate, polyacrylonitrile, polyimide, polyamide, polyamideimide, polycarbonate, styrene elastomer, butadiene elastomer, styrene-butadiene elastomer, and polyacrylic acid.

The binder for a non-aqueous electrolyte battery of the present disclosure can be suitably used as a material for forming a battery such as a secondary battery or a capacitor.

The present disclosure also relates to use of a binder containing a polymer containing a segment A having a glass transition temperature of 25°C or less and a segment B having a melting point of 50°C or more, to form a non-aqueous electrolyte battery. The binder can be particularly suitably used to form an electrode material layer of a non-aqueous electrolyte battery.

The present disclosure also relates to use of a binder containing a polymer having a glass transition temperature and a melting point, containing a 2,3,3,3-tetrafluoropropene unit, and having an extraction in tetrahydrofuran at 25°C of 5% by mass or less, to form a non-aqueous electrolyte battery. The binder can be particularly suitably used to form an electrode material layer of a non-aqueous electrolyte battery.

The battery may be a primary battery in some embodiments, and may be a storage battery (secondary battery) or an energy storage element in other embodiments. The non-aqueous electrolyte battery includes all non-aqueous electrolytic solution battery including an electrolytic solution and a power generation element. Examples of the non-aqueous electrolyte battery include a lithium ion primary battery, a lithium ion secondary battery, a sodium ion secondary battery, a nickel hydrogen battery, a lithium ion capacitor, and an electric double layer capacitor.

The binder for a non-aqueous electrolyte battery according to the present disclosure can form an electrode material layer having excellent softness and toughness, and thus is suitable as a binder used for an electrode of a battery such as a secondary battery or a capacitor. The binder for a non-aqueous electrolyte battery according to the present disclosure can also be used as a binder for coating a secondary battery separator.

The binder for a non-aqueous electrolyte battery of the present disclosure may be a binder for a non-aqueous electrolyte secondary battery. In the present disclosure, the binder for a non-aqueous electrolyte secondary battery includes a binder used for a positive electrode, a negative electrode, or a separator of a non-aqueous electrolyte secondary battery. The non-aqueous electrolyte secondary battery is preferably a lithium ion secondary battery.

3. Electrode mixture

The electrode mixture for a non-aqueous electrolyte battery of the present disclosure contains the above binder for a non-aqueous electrolyte battery, a powder electrode material, and water or a non-aqueous solvent. The electrode mixture of the present disclosure may be an electrode mixture for a non-aqueous electrolyte secondary battery or may be an electrode mixture for a lithium ion secondary battery. Because the electrode mixture of the present disclosure contains the above binder for a non-aqueous electrolyte battery, an electrode material layer having excellent softness and toughness can be formed.

The electrode mixture is a positive electrode mixture used for creating a positive electrode in some embodiments and is a negative electrode mixture used for creating a negative electrode in other embodiments. The electrode material layer formed from the electrode mixture of the present disclosure is a positive electrode material layer in some embodiments and is a negative electrode material layer in other embodiments as long as it contains the above binder for battery and a powder electrode material.

The powder electrode material is a powder electrode material used for a battery, and preferably includes an electrode active material. The electrode active material is divided into a positive electrode active material and a negative electrode active material. In the case of a lithium ion secondary battery, the positive electrode active material is not limited as long as it can electrochemically absorb and desorb a lithium ion, and is preferably a lithium composite oxide and more preferably a lithium transition metal composite oxide. The positive electrode active material is also preferably a lithium-containing transition metal phosphate compound. The positive electrode active material is also preferably a substance containing lithium and at least one transition metal, such as a lithium transition metal composite oxide or a lithium-containing transition metal phosphate compound.

Preferable examples of the transition metal of the lithium transition metal composite oxide include V, Ti, Cr, Mn, Fe, Co, Ni, and Cu, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and compounds obtained by replacement of a part of the transition metal atoms mainly constituting these lithium transition metal composite oxides with another metal such as Al, Ti, V, Cr, Mn, Fe, Co, Li, Ni, Cu, Zn, Mg, Ga, Zr, or Si. Examples of the compounds obtained by replacement include a lithium-nickel-manganese composite oxide, a lithium-nickel-cobalt-aluminum composite oxide, a lithium-nickel-cobalt-manganese composite oxide, a lithium-manganese-aluminum composite oxide, and a lithium-titanium composite oxide, and more specific examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiNi_{0.9}Mn_{0.05}Co_{0.05}O_2$, LiMn1.8Al0.2O4, LiMn1.5Ni0.5O4, Li4Ti5O12, and LiNi0.82Co0.15Al0.03O2.

Preferable examples of the transition metal of the lithium-containing transition metal phosphate compound include V, Ti, Cr, Mn, Fe, Co, Ni, and Cu, and specific examples of the lithium-containing transition metal phosphate compound include an iron phosphate compound such as $LiFePO_4$, $Li_3Fe_2(PO_4)_3$, or $LiFeP_2O_7$, a cobalt phosphate

compound such as $LiCoPO_4$, and compounds obtained by replacement of a part of the transition metal atoms mainly constituting these lithium transition metal phosphate compounds with another metal such as Al, Ti, V, Cr, Mn, Fe, Co, Li, Ni, Cu, Zn, Mg, Ga, Zr, Nb, or Si.

In particular, $LiCoO_2$, $LiNiO_2$, $LiMn_2O_4$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{08}Mn_{0.1}Co_{0.1}O_2$, $LiNi_{0.9}Mn_{0.05}Co_{0.05}O_2$, and $LiFePO_4$ are preferable from the viewpoint of high voltage, high energy density, charge/discharge cycle characteristics, or the like.

In addition, the lithium transition metal composite oxide is preferably a lithium-nickel-based composite oxide, and more preferably a lithium-nickel-based composite oxide represented by the general formula (7):

$$\text{general formula (7):} \qquad Li_yNi_{1-x}M_xO_2$$

wherein x is $0.01 \leq x \leq 0.5$, y is $0.9 \leq y \leq 1.2$, and M represents a metal atom excluding Li and Ni. The lithium transition metal composite oxide having such a high nickel content is beneficial for increasing the capacity of a secondary battery.

In the general formula (7), x is a coefficient satisfying $0.01 \leq x \leq 0.5$, and from the viewpoint of being able to obtain a secondary battery having a higher capacity, preferably $0.05 \leq x \leq 0.4$ and more preferably $0.10 \leq x \leq 0.3$.

In the general formula (7), examples of the metal atom of M include V, Ti, Cr, Mn, Fe, Co, Cu, Al, Zn, Mg, Ga, Zr, and Si. The metal atom of M is preferably a transition metal such as V, Ti, Cr, Mn, Fe, Co, or Cu, or a combination of any of the above transition metals and a further metal such as Al, Ti, V, Cr, Mn, Fe, Co, Cu, Zn, Mg, Ga, Zr, or Si.

The lithium transition metal composite oxide having high nickel content is preferably at least one selected from the group consisting of $LiNi_{0.80}Co_{0.15}Al_{0.05}O_2$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$, and more preferably at least one selected from the group consisting of $LiNi_{0.82}Co_{0.15}Al_{0.03}O_2$, $LiNi_{0.6}Mn_{0.2}Co_{0.2}O_2$, $LiNi_{0.8}Mn_{0.1}Co_{0.1}O_2$, and $LiNi_{0.9}Mn_{0.05}Co_{0.05}O_2$.

In addition, these positive electrode active materials used may each have a surface to which a substance different in formulation from the substance mainly constituting the positive electrode active material adheres. Examples of the surface adhering substance include an oxide such as aluminum oxide, silicon oxide, titanium oxide, zirconium oxide, magnesium oxide, calcium oxide, boron oxide, antimony oxide, or bismuth oxide, a sulfate such as lithium sulfate, sodium sulfate, potassium sulfate, magnesium sulfate, calcium sulfate, or aluminum sulfate, and a carbonate such as lithium carbonate, calcium carbonate, or magnesium carbonate.

These surface adhering substances can each be adhered to the surface of a positive electrode active material, for example, by a method involving dissolving or suspending the surface adhering substance in a solvent to add the resulting solution or suspension to the positive electrode active material by impregnation and drying the same, a method involving dissolving or suspending a surface adhering substance precursor in a solvent to add the resulting solution or suspension to the positive electrode active material by impregnation and then reacting these by heating or the like, or a method involving adding the surface adhering substance to a positive electrode active substance precursor and simultaneously calcining these.

The lower limit of the amount by mass of the surface adhering substance used is preferably 0.1 ppm or more, more preferably 1 ppm or more, and further preferably 10 ppm or more, and the upper limit thereof is preferably 20% or less, more preferably 10% or less, and further preferably 5% or less based on the positive electrode active material. The surface adhering substance can suppress the oxidation reaction of the non-aqueous electrolyte on the surface of the positive electrode active material and improve the battery life, and if the amount thereof adhered is too small, the effects thereof are not sufficiently developed, and if the amount is too large, the resistance may increase because the surface adhering substance inhibits the entry and exit of a lithium ion.

A particle of the positive electrode active material may have a blocky shape, a polyhedral shape, a spherical shape, an oval shape, a plate-like shape, a needle-like shape, a columnar shape, or the like as conventionally used, and among these, preferably, a primary particle aggregates to form a secondary particle that has a spherical shape or an oval shape. Usually, the active material in the electrode expands and contracts with the charge and discharge of an electrochemical element, and thus the stress thereof is likely to cause a deterioration such as destruction of the active material or disconnection of a conductive path. Because of this, an active material in which a primary particle aggregates to form a secondary particle is more preferable than a single particle active material containing only a primary particle because the former relaxes the stress of expansion and contraction and prevents a deterioration. In addition, a particle having a spherical shape or an oval shape is more preferable than an axially oriented particle such as a particle having a plate-like shape because the former particle is less oriented when an electrode is molded and thus the electrode also expands and contracts less during charge and discharge, and even when the former particle is mixed with a conductive agent in electrode creation, it is easy to mix the former particle uniformly.

The tap density of the positive electrode active material is usually 1.3 g/cm$^3$ or more, preferably 1.5 g/cm$^3$ or more, further preferably 1.6 g/cm$^3$ or more, and most preferably 1.7 g/cm$^3$ or more. If the tap density of the positive electrode active material is lower than the above lower limit, when forming a positive electrode material layer, the required amount of a dispersion medium increases, the required amount of a conductive agent or a binder increases, and the rate of filling of the positive electrode material layer with the positive electrode active material may be limited to limit the battery capacity. A high density positive electrode material layer can be formed by using a metal composite oxide powder having a high tap density. In general, a larger tap density is more preferable, and there is no particular upper limit thereon, and if the tap density is too large, the diffusion of a lithium ion using a non-aqueous electrolyte as a medium in the positive electrode material layer may be rate-determining to easily reduce the load characteristics, and thus the upper limit of the tap density is usually 3.5 g/cm$^3$ or less and preferably 3.3 g/cm$^3$ or less.

The density determined as follows is defined as the tap density of the positive electrode active material: a sample is passed through a sieve having an opening size of 300 $\mu$m, dropped into a tapping cell of 20 cm$^3$ to fill the cell volume, then tapping is carried out at a stroke length of 10 mm 1000 times using a powder density measuring instrument (for example, Tap Denser manufactured by Seishin Enterprise Co., Ltd.), and the density is determined from the volume at that time and the weight of the sample.

The median diameter d50 (secondary particle size when a primary particle aggregates to form a secondary particle) of the particle of the positive electrode active material is usually 0.1 $\mu$m or more, preferably 0.5 $\mu$m or more, more preferably 1 $\mu$m or more, most preferably 3 $\mu$m or more, and usually 20 $\mu$m or less, preferably 18 $\mu$m or less, more preferably 16 $\mu$m or less, most preferably 15 $\mu$m or less. If d50 is lower than the above lower limit, it may not be possible to obtain a high bulk density product, and if d50 exceeds the upper limit, for example the following problems may occur: it takes time to diffuse lithium in the particles, resulting in reduction in battery performance, and when creating a positive electrode of a battery, that is, slurrying an active material and a conductive agent, a binder, or the like using a solvent to apply the resulting slurry in the form of a thin film, a streak is formed. Here, mixing of two or more positive electrode active materials having different median diameters d50 can also further improve the filling property when creating a positive electrode.

The median diameter d50 in the present disclosure is measured using a known laser diffraction/scattering type particle size distribution measurement apparatus. When LA-920 manufactured by HORIBA, Ltd. is used as a particle size distribution analyzer, d50 is measured by using a 0.1% by mass sodium hexametaphosphate aqueous solution as a dispersion medium used for the measurement, carrying out ultrasonic dispersion for 5 minutes, and then setting the measurement refractive index to 1.24.

When a primary particle aggregates to form a secondary particle, the average primary particle size of the positive electrode active material is usually 0.01 $\mu$m or more, preferably 0.05 $\mu$m or more, further preferably 0.08 $\mu$m or more, most preferably 0.1 $\mu$m or more, and usually 3 $\mu$m or less, preferably 2 $\mu$m or less, further preferably 1 $\mu$m or less, most preferably 0.6 $\mu$m or less. If the average primary particle size exceeds the above upper limit, it is difficult to form a spherical secondary particle, which adversely affects the powder filling property and greatly reduces the specific surface area, and thus battery performance such as output characteristics may be likely to decrease. On the contrary, if the average primary particle size is lower than the above lower limit, a crystal is usually underdeveloped, which may cause a problem such as poor charge/discharge reversibility. The primary particle size is measured by observation using a scanning electron microscope (SEM). Specifically, the primary particle size is determined by obtaining the value of the longest segment of a straight line in the horizontal direction formed by the left and right boundary lines of a primary particle on a photograph at a magnification of 10,000 times for each of any 50 primary particles and averaging the obtained values.

The BET specific surface area of the positive electrode active material is 0.1 m$^2$/g or more, preferably 0.15 m$^2$/g or more, further preferably 0.18 m$^2$/g or more, and 4.0 m$^2$/g or less, preferably 2.5 m$^2$/g or less, further preferably 1.5 m$^2$/g or less. If the BET specific surface area is smaller than this range, the battery performance easily decreases, and if the BET specific surface area is larger than this range, the tap density does not easily increase, and a problem may easily occur in the coating performance when forming the positive electrode material layer.

The BET specific surface area is defined as a value determined using a surface area meter (for example, a fully automatic surface area measurement apparatus manufactured by Ohkura Riken) by pre-drying a sample at 150°C for 30 minutes under a nitrogen flow and then measuring the sample by the nitrogen adsorption BET single point method according to the gas flow method using a nitrogen helium mixed gas accurately adjusted such that the value of nitrogen pressure relative to atmospheric pressure is 0.3.

The method for producing a positive electrode active material may be a general method used as a method for producing an inorganic compound. In particular, various methods can be considered for creating a spherical or oval active material, and examples thereof include a method for obtaining an active material by dissolving or pulverizing and dispersing a transition metal raw material such as a transition metal nitrate or sulfate and optionally a raw material of another element in a solvent such as water and regulating the pH while stirring to create and recover a spherical precursor, optionally drying this precursor, then adding a Li source such as LiOH, Li$_2$CO$_3$, or LiNO$_3$, and calcining the resulting mixture at a high temperature, a method for obtaining an active material by dissolving or pulverizing and dispersing a transition metal raw material such as a transition metal nitrate, sulfate, hydroxide, or oxide and optionally a raw material of another element in a solvent such as water, drying and molding the resulting solution or suspension using a spray dryer or the like to obtain a spherical or oval precursor, adding a Li source such as LiOH, Li$_2$CO$_3$, or LiNO$_3$ to this precursor, and calcining the resulting mixture at a high temperature, and a method for obtaining an active material by dissolving or pulverizing and dispersing a transition metal raw material such as a transition metal nitrate, sulfate, hydroxide, or oxide, a Li source such as LiOH, $Li_2CO_3$, or $LiNO_3$, and optionally a raw material of another element in a solvent such as water, drying and molding the resulting solution or suspension using a spray dryer or the like to obtain a spherical or oval precursor, and calcining this precursor at a high temperature.

In the present disclosure, one positive electrode active material powder may be used alone, or two or more positive electrode active material powders having different formulations or different powder physical characteristics may be used together in any combination and ratio.

The negative electrode active material is not limited as long as it can electrochemically absorb and desorb a lithium ion, and examples thereof include a carbonaceous material, a metal oxide such as tin oxide or silicon oxide, a metal composite oxide, simple lithium and a lithium alloy such as a lithium-aluminum alloy, and a metal that can form an alloy with lithium such as Sn or Si. One of these may be used alone or two or more thereof may be used together in any combination and ratio.

The metal composite oxide is not limited as long as it can absorb and desorb lithium, and from the viewpoint of high current density charge/discharge characteristics, it is preferable to contain titanium and/or lithium as a constituent.

From the viewpoint of a good balance between the initial irreversible capacity and the high current density charge/discharge characteristics, the carbonaceous material is preferably selected from:

(1) natural graphite;

(2) an artificial carbonaceous substance and an artificial graphite substance; and a carbonaceous material obtained by one or more times of heat treatment in the range of 400°C to 3,200°C of a carbonaceous substance {for example, natural graphite, coal-based coke, petroleum-based coke, coal-based pitch, petroleum-based pitch, or a material obtained by oxidation treatment of any of these pitches; needle coke, pitch coke, or a carbon material obtained by partial graphitization of any of these cokes; a pyrolysate of an organic substance such as furnace black, acetylene black, or pitch-based carbon fiber; a carbonizable organic substance (for example, coal tar pitches from soft pitch to hard pitch; a coal-based heavy oil such as dry distillation/liquefaction oil; a straight-run heavy oil such as atmospheric residue or vacuum residue; a cracking-derived petroleum heavy oil such as ethylene tar as a byproduct generated in thermal cracking of crude oil, naphtha, or the like; further, an aromatic hydrocarbon such as acenaphthylene, decacyclene, anthracene, or phenanthrene; a N-ring compound such as phenazine or acridine; a S-ring compound such as thiophene or bithiophene; a polyphenylene such as biphenyl or terphenyl; polyvinyl chloride, polyvinyl alcohol, polyvinyl butyral, or a material obtained by insolubilizing any thereof; a nitrogen-containing organic polymer such as polyacrylonitrile or polypyrrole; a sulfur-containing organic polymer such as polythiophene or polystyrene; a natural polymer such as a polysaccharide typified by cellulose, lignin, mannan, polygalacturonic acid, chitosan, or saccharose; a thermoplastic resin such as polyphenylene sulfide or polyphenylene oxide; a thermosetting resin such as a furfuryl alcohol resin, a phenol-formaldehyde resin, or an imide resin) and a carbide of any of these; and a solution obtained by dissolving a carbonizable organic substance in a low-molecular-weight organic solvent such as benzene, toluene, xylene, quinoline, or n-hexane, and a carbide thereof};

(3) a carbonaceous material in which the negative electrode material layer is composed of at least two or more carbonaceous substances having different crystallinities and/or has an interface at which the carbonaceous substances having different crystallinities are in contact with each other; and

(4) a carbonaceous material in which the negative electrode material layer is composed of at least two carbonaceous substances having different orientations and/or has an interface at which the carbonaceous substances having different orientations are in contact with each other.

The content of the electrode active material (positive electrode active material or negative electrode active material) is preferably 40% by mass or more in the electrode mixture in order to increase the capacity of the electrode obtained.

The powder electrode material may further include a conductive agent. Examples of the conductive agent include a carbon black such as acetylene black or ketjen black, a carbon material such as graphite, a carbon fiber, a carbon nanotube, a carbon nanohorn, and graphene.

The proportion by mass of the powder electrode material (active material and conductive agent) to the above binder for battery in the electrode mixture is usually about 80:20 to 99.5:0.5 and is determined in consideration of the holding of the powder components, the adhesion to the current collector, and the conductivity of the electrode.

With the blending proportion as described above, the above binder for battery cannot completely fill a gap between the powder components in the electrode material layer formed on the current collector, but when water or a non-aqueous solvent that dissolves or disperses the binder for battery well is used as a solvent, the binder for battery is uniformly dispersed to form a network structure in the electrode material layer after drying, which holds the powder component well and thus is preferable.

The electrode mixture of the present disclosure contains water or a non-aqueous solvent. Examples of the non-aqueous solvent include a nitrogen-containing organic solvent such as N-methyl-2-pyrrolidone, N,N-dimethylacetamide, or dimethylformamide; a ketone-based solvent such as acetone, methylethylketone, cyclohexanone, or methyl isobutyl ketone; an ester-based solvent such as ethyl acetate or butyl acetate; an ether-based solvent such as dioxane; and also a general-purpose organic solvent having a low boiling point such as a mixed solvent thereof.

The electrode mixture of the present disclosure preferably contains a non-aqueous solvent among the above, preferably contains at least one selected from the group consisting of N-methyl-2-pyrrolidone and N,N-dimethylacetamide, and more preferably contains N-methyl-2-pyrrolidone, from the viewpoint of excellent stability and coating performance of the electrode mixture.

The amount of water or a non-aqueous solvent in the electrode mixture is determined in consideration of coating of the current collector, formation of a thin film after drying, and the like. Usually, the proportion by mass of the binder for battery to water or a non-aqueous solvent the liquid is preferably 0.5:99.5 to 20:80.

The electrode mixture may further include, for example, an acrylic resin such as polyacrylic acid, polymethacrylate, or polymethyl methacrylate, and a polyimide, polyamide, or polyamideimide-based resin, styrene elastomer, butadiene elastomer, or styrene-butadiene elastomer, in order to further improve the adhesion to a current collector.

In order to improve the dispersion stability of an electrode slurry, a dispersant such as a resin-based or cationic surfactant or a nonionic surfactant having a surfactant action and the like may be added to the electrode mixture.

The content of the binder for non-aqueous electrolyte battery in the electrode mixture is preferably 0.1 to 20% by mass, more preferably 0.2 to 10% by mass and further preferably 0.5 to 3% by mass based on the mass of the electrode mixture.

Examples of a method for preparing the electrode mixture include a method involving dispersing and mixing the powder electrode material into a solution or a dispersion obtained by dissolving or dispersing the binder for non-aqueous electrolyte battery in water or a non-aqueous solvent. Then, the obtained electrode mixture is uniformly applied to a current collector such as a metal foil or a metal net, dried, and optionally pressed to form a thin electrode material layer on the current collector to form a thin-film electrode.

In addition, an electrode mixture may be created by first mixing a powder of the binder for non-aqueous electrolyte battery and a powder of the electrode material and then adding water or a non-aqueous solvent. In addition, an electrode sheet can also be created by heating and melting a powder of the binder for non-aqueous electrolyte battery and a powder of the electrode material and extruding the resulting melt using an extruder to create a thin-film electrode mixture, and bonding the thin-film electrode mixture to a current collector to which a conductive adhesive or a general-purpose organic solvent is applied. Further, a solution or a dispersion of the powder of the binder for non-aqueous electrolyte battery and the powder of the electrode material may be applied to an electrode material preformed in advance. As described above, the method of application as a binder for non-aqueous electrolyte battery is not limited.

4. Electrode

The electrode of the present disclosure contains the above binder for a non-aqueous electrolyte battery. The electrode of the present disclosure is preferably an electrode for a non-aqueous electrolyte battery. Because the electrode of the present disclosure contains the above binder for a non-aqueous electrolyte battery, even when the powder electrode material is thickly applied, wound, and pressed for high density, the electrode is not cracked and there is no shedding of the powder electrode material or peeling off from the current collector.

The above electrode preferably includes a current collector and an electrode material layer containing the above powder electrode material and the above binder for non-aqueous electrolyte battery and formed on the current collector. The above electrode is a positive electrode in some embodiments and is a negative electrode in other embodiments, and is preferably a positive electrode.

Examples of the current collector (positive electrode current collector and negative electrode current collector) include a metal foil and a metal mesh of iron, stainless steel, copper, aluminum, nickel, titanium, or the like. Among these, an aluminum foil or the like is preferable as the positive electrode current collector, and a copper foil or the like is preferable as the negative electrode current collector.

The electrode of the present disclosure can be produced, for example, by the method described above. The above electrode mixture has excellent coating performance, and thus an electrode including a smooth, uniform, and thick electrode material layer can be easily created by creating the electrode material layer included in the electrode of the present disclosure using the above electrode mixture.

5. Non-aqueous electrolyte battery

The non-aqueous electrolyte battery of the present disclosure includes the above electrode. The non-aqueous electrolyte battery of the present disclosure is preferably a non-aqueous electrolyte secondary battery. In one embodiment, the non-aqueous electrolyte battery of the present disclosure includes a positive electrode in which a positive electrode mixture is held in a positive electrode current collector, a negative electrode in which a negative electrode mixture is held in a negative electrode current collector, and an electrolytic solution. In the non-aqueous electrolyte secondary battery of the present disclosure, at least one of the positive electrode and the negative electrode may be the above electrode, and the positive electrode is preferably the above electrode. The secondary battery is preferably a lithium ion secondary battery.

The non-aqueous electrolyte secondary battery of the present disclosure preferably further includes a non-aqueous electrolytic solution. The non-aqueous electrolytic solution is not limited, and may be one or two or more of a known hydrocarbon-based solvent such as propylene carbonate, ethylene carbonate, butylene carbonate, $\gamma$-butyl lactone, 1,2-dimethoxyethane, 1,2-diethoxyethane, dimethyl carbonate, diethyl carbonate, or ethylmethyl carbonate; and a fluorinated solvent such as fluoroethylene carbonate, fluoroether, or fluorinated carbonate. Any conventionally known electrolyte can be used, and $LiClO_4$, $LiAsF_6$, $LiPF_6$, $LiBF_4$, LiCl, LiBr, $CH_3SO_3Li$, $CF_3SO_3Li$, cesium carbonate, or the like can be used.

In addition, a separator may be interposed between the positive electrode and the negative electrode. The separator may be a conventionally known separator or a separator using the above binder for battery for coating.

It is also preferable to use the above binder for non-aqueous electrolyte battery for at least one of the positive electrode, the negative electrode, and the separator of the secondary battery (preferably lithium ion secondary battery).

A film for a secondary battery made of the above binder for non-aqueous electrolyte battery is also one of the preferable embodiments of the present disclosure.

A laminate for a secondary battery having a substrate and a layer made of the above binder for non-aqueous electrolyte battery formed on the substrate is also one of the preferable embodiments of the present disclosure. Examples of the substrate include those given as examples of the above current collector, and a known substrate (porous film or the like) used for a separator of a secondary battery.

The electrode of the present disclosure includes an electrode material layer having excellent softness and toughness, and thus can be suitably used as an electrode for a wound type non-aqueous electrolyte secondary battery. In addition, the non-aqueous electrolyte secondary battery of the present disclosure may be a wound type non-aqueous electrolyte secondary battery.

The embodiments have been described above, and it will be understood that various modifications of the embodiments and details are possible without departing from the spirit and scope of the claims.

<1> According to a first aspect of the present disclosure,
provided is a binder for a non-aqueous electrolyte battery, including a polymer comprising a segment A having a glass transition temperature of 25°C or less and a segment B having a melting point of 50°C or more.
<2> According to a second aspect of the present disclosure,
provided is the binder for a non-aqueous electrolyte battery according to the first aspect, wherein the segment A has a heat of fusion of less than 5 J/g, and the segment B has a heat of fusion of 5 J/g or more.
<3> According to a third aspect of the present disclosure,
provided is the binder for a non-aqueous electrolyte battery according to the first or second aspect, wherein the polymer includes a chain structure represented by a general formula (1) or a general formula (2):

General formula (1): A-B-A

General formula (2): B-A-B

wherein A represents the segment A, and B represents the segment B.
<4> According to a fourth aspect of the present disclosure,
provided is the binder for a non-aqueous electrolyte battery according to any one of the first to third aspects, wherein the segment A of the polymer includes a fluorine-containing monomer unit.
<5> According to a fifth aspect of the present disclosure,
provided is the binder for a non-aqueous electrolyte battery according to any one of the first to fourth aspects, wherein the segment A of the polymer comprises vinylidene fluoride unit.
<6> According to a sixth aspect of the present disclosure,
provided is the binder for a non-aqueous electrolyte battery according to any one of the first to fifth aspects, wherein the segment A of the polymer comprises vinylidene fluoride unit and at least one selected from the group consisting of repeating units represented by any of the following formulas:

Formula:

$$-CF_2-CF[-CF_3]-$$

Formula:

$$-CH_2-CFRf^1-$$

wherein $Rf^1$ is a linear or branched fluorinated alkyl group or fluorinated alkoxy group having 1 to 12 carbon atoms, and, when the number of carbon atoms is 2 or more, optionally includes oxygen atom between carbon atoms thereof, Formula:

$$-CHF-CHRf^2-$$

wherein $Rf^2$ is a linear or branched fluorinated alkyl group or fluorinated alkoxy group having 1 to 12 carbon atoms, and,

when the number of carbon atoms is 2 or more, optionally includes oxygen atom between carbon atoms thereof.

<7> According to a seventh aspect of the present disclosure,
provided is the binder for a non-aqueous electrolyte battery according to any one of the first to sixth aspects, wherein the segment A of the polymer comprises vinylidene fluoride unit and 2,3,3,3-tetrafluoropropene unit.
<8> According to an eighth aspect of the present disclosure,
provided is the binder for a non-aqueous electrolyte battery according to any one of the fifth to seventh aspects, wherein a content of the vinylidene fluoride unit in the segment A of the polymer is 99 to 15 mol% based on all monomer units constituting the segment A.
<9> According to a ninth aspect of the present disclosure,
provided is the binder for a non-aqueous electrolyte battery according to any one of the first to eighth aspects, wherein the segment B of the polymer comprises a fluorine-containing monomer unit.
<10> According to a tenth aspect of the present disclosure,
provided is the binder for a non-aqueous electrolyte battery according to any one of the first to ninth aspects, wherein the segment B of the polymer comprises vinylidene fluoride unit.
<11> According to an eleventh aspect of the present disclosure,
provided is the binder for a non-aqueous electrolyte battery according to the tenth aspect, wherein a content of vinylidene fluoride unit in the segment B of the polymer is 97 mol% or more based on all monomer units constituting the segment B.
<12> According to a twelfth aspect of the present disclosure,
provided is the binder for a non-aqueous electrolyte battery according to any one of the first to eleventh aspects, wherein
the segment B of the polymer includes

only vinylidene fluoride unit, or
vinylidene fluoride unit and at least one monomer unit selected from the group consisting of tetrafluoroethylene unit, hexafluoropropylene unit, 2,3,3,3-tetrafluoropropene unit, and (meth)acrylic acid unit.

<13> According to a thirteenth aspect of the present disclosure,
provided is the binder for a non-aqueous electrolyte battery according to any one of the first to twelfth aspects, wherein a mass ratio of the segment A to the segment B in the polymer is 40/60 to 95/5.
<14> According to a fourteenth aspect of the present disclosure,

provided is the binder for a non-aqueous electrolyte battery according to any one of the first to thirteenth aspects, wherein
the polymer includes a chain structure represented by a general formula (1) or a general formula (2):

General formula (1): A-B-A

General formula (2): B-A-B

wherein A represents the segment A, and B represents the segment B,
the segment A of the polymer has a glass transition temperature of -10°C or less, and comprises vinylidene fluoride unit and 2,3,3,3-tetrafluoropropene unit, wherein a content of 2,3,3,3-tetrafluoropropene unit in the segment A is 18 to 30 mol% based on all monomer units constituting the segment A, and a content of vinylidene fluoride unit in the segment A is 70 to 82 mol% based on all monomer units constituting the segment A,

the segment B of the polymer has a melting point of 140 to 200°C, and comprises vinylidene fluoride unit, wherein a content of vinylidene fluoride unit in the segment B is 97 mol% or more based on all monomer units constituting the segment B,

a mass ratio of the segment A to the segment B in the polymer is 50/50 to 90/10, and

a weight average molecular weight of the polymer is 200,000 to 2,000,000.

<15> According to a fifteenth aspect of the present disclosure,

provided is a binder for a non-aqueous electrolyte battery, including a polymer, wherein the polymer has a glass transition temperature and a melting point, comprises 2,3,3,3-tetrafluoropropene unit, and has an extraction in tetrahydrofuran at 25°C of 5% by mass or less.

<16> According to a sixteenth aspect of the present disclosure,

provided is the binder for a non-aqueous electrolyte battery according to the fifteenth aspect, wherein the polymer further comprises a vinylidene fluoride unit.

<17> According to a seventeenth aspect of the present disclosure,

provided is the binder for a non-aqueous electrolyte battery according to the fifteenth or sixteenth aspect, wherein the polymer includes two or more segments.

<18> According to an eighteenth aspect of the present disclosure,

provided is the binder for a non-aqueous electrolyte battery according to any one of the fifteenth to seventeenth aspects, wherein

the glass transition temperature of the polymer is -10°C or less,

the melting point of the polymer is 140 to 200°C,

the polymer comprises vinylidene fluoride unit and 2,3,3,3-tetrafluoropropene unit, wherein a content of 2,3,3,3-tetrafluoropropene unit is 9 to 24 mol% based on all monomer units constituting the polymer, and a content of vinylidene fluoride unit is 76 to 91 mol% based on all monomer units constituting the polymer,

the extraction in tetrahydrofuran at 25°C of the polymer is 2 to 4% by mass, and

a weight average molecular weight of the polymer is 200,000 to 2,000,000.

<19> According to a nineteenth aspect of the present disclosure,

provided is an electrode mixture for a non-aqueous electrolyte battery, comprising the binder for a non-aqueous electrolyte battery according to any one of the first to eighteenth aspects.

<20> According to a twentieth aspect of the present disclosure,

provided is the electrode mixture for a non-aqueous electrolyte batter according to the nineteenth aspect, further comprising a powder electrode material, and water or a non-aqueous solvent.

<21> According to a twenty-first aspect of the present disclosure,

provided is an electrode for a non-aqueous electrolyte battery, comprising an electrode material layer formed of the electrode mixture according to the nineteenth or twentieth aspect.

<22> According to a twenty-second aspect of the present disclosure,

provided is a non-aqueous electrolyte battery comprising the electrode according to the twenty-first aspect.

[Examples]

Next, the embodiments of the present disclosure will be described with reference to Examples, but the present disclosure is not limited only to the Examples.

The numerical values in Examples were measured by the following methods.

<Polymer formulation>

The formulation of a fluorine-containing copolymer and a PVdF was measured by a solution NMR method.

Measuring apparatus: VNMRS400 manufactured by Varian, Inc.
Resonance frequency: 376.04 (Sfrq)
Pulse width: 30° (pw = 6.8)

<Content of polar group-containing monomer unit in PVdF>

The content of a polar group-containing monomer unit (acrylic acid unit, maleic acid, or the like) in a PVdF was measured by acid-base titration of a carboxyl group. Specifically, about 0.5 g of a PVdF was dissolved in acetone at a temperature of 70 to 80°C. 5 ml of water was added dropwise under vigorous stirring to avoid coagulation of the PVdF. The resulting mixture was subjected to titration with a NaOH aqueous solution having a concentration of 0.1 N until complete neutralization of acidity, with neutral transition at about -270 mV. From the measurement results, the amount of substance of the polar group-containing monomer unit contained in 1 g of the PVdF was determined to calculate the content of the polar group-containing monomer unit.

<Weight average molecular weight>

The weight average molecular weight of PVdF was measured by gel permeation chromatography (GPC). The weight average molecular weight was calculated from data (reference: polystyrene) obtained by measurement using AS-8010, CO-8020, and columns (three GMHHR-H connected in series) manufactured by Tosoh Corporation and RID-10A manufactured by Shimadzu Corporation under a flow of dimethylformamide (DMF) as a solvent at a flow rate of 1.0 ml/min.

For the weight average molecular weight of the fluorine-containing copolymer, the molecular weight was calculated in terms of standard polystyrene based on the results measured by the GPC method.

GPC apparatus: TOSOH HLC-8320GPC
Column: one SuperAW-H, three SuperAWM-H
Developing solvent: dimethylformamide [DMF]
Sample concentration: 0.05% by mass
Measurement temperature: 40°C

<Storage elastic modulus (E')>

The storage elastic modulus is a value measured at 30°C or 60°C by dynamic viscoelasticity measurement, and a test piece having a length of 30 mm, a width of 5 mm, and a thickness of 50 to 100 $\mu$m was measured under conditions of tensile mode, a grip width of 20 mm, a measurement temperature of -30°C to 160°C, a temperature-increasing rate of 2°C/min, and a frequency of 1 Hz using Dynamic Viscoelastic Analyzer DVA220 manufactured by IT Measurement Control.

The test piece used for measurement was created by casting a solution obtained by dissolving a PVdF in N-methyl-2-pyrrolidone (NMP) such that the concentration was 10 to 20% by mass onto a glass plate, drying the cast solution at 100°C for 12 hours and further drying the same under vacuum at 100°C for 12 hours, and cutting the resulting film having a thickness of 50 to 100 $\mu$m into a length of 30 mm and a width of 5 mm.

<Melting point>

The temperature corresponding to peak of an endothermic curve when the temperature of a sample was raised from 30°C to 220°C at a rate of 10°C/min using a differential scanning calorimetry (DSC) apparatus was determined as the melting point.

<Glass transition temperature (Tg)>

Using a differential scanning calorimeter (DSC822e manufactured by Mettler Toledo, or X-DSC7000 manufactured by Hitachi High-Tech Science Corporation), the temperature of 10 mg of a sample was raised at 20°C/min to obtain a DSC curve, and the temperature indicating an intersection point of the extensions of the base lines before and after the secondary transition of the DSC curve and the tangent line at an inflection point of the DSC curve was defined as the glass transition temperature.

<Heat of fusion>

Using a differential scanning calorimeter (DSC822e manufactured by Mettler Toledo, or X-DSC7000 manufactured by Hitachi High-Tech Science Corporation), the temperature of a sample was raised from 30°C to 220°C at 10°C/min, and the heat of fusion was calculated from the magnitude of the melting peak ($\Delta$H) of the obtained endothermic curve.

<Extraction in THF>

To 1 g of each polymer obtained in each Example, 9 g of tetrahydrofuran (THF) was added, and the mixture was stirred at 25°C with a stirrer. The solid was filtered after 24 hours, the solution was dried, and the weight of the dried product was measured to calculate the extraction (the proportion of the weight of the dried product to the weight (1 g) of the polymer (% by mass)).

<Viscosity change rate of positive electrode mixture>

The viscosity of the positive electrode mixture 10 minutes after the start of measurement was measured using a B-type viscometer (manufactured by Brookfield, DV2T) under conditions of 25°C, spindle LV-04 (64), and a rotation speed of 6 rpm. The viscosity change rate (X24) was determined from the viscosity ($\eta$0) of the positive electrode mixture measured immediately after the preparation of the positive electrode mixture and the viscosity ($\eta$24) 24 hours after the preparation of the mixture under the conditions of a storage temperature at 50°C, by the following expression.

$$Xn = \eta24/\eta0 \times 100 \ [\%]$$

<Peel strength between positive electrode material layer and positive electrode current collector of positive electrode>

The positive electrode including a positive electrode material layer on one side was cut off to create a 1.2 cm × 7.0 cm test piece. The positive electrode material layer side of the test piece was fixed to a movable jig using a double-sided tape, then a tape was attached to the surface of a positive electrode current collector, and the stress (N/cm) when the tape was pulled at an angle of 90 degrees at a speed of 100 mm/min was measured using an autograph. 1 N was used for the load cell of the autograph.

<Maximum test force>

Bending strength (3-point bending test) was measured by a method according to ASTM D790. A positive electrode including a positive electrode material layer on each of both sides or a negative electrode including a negative electrode material layer on each of both sides was cut into a size of 15 mm × 20 mm to prepare a test piece. According to the 3-point bending method, the test piece was disposed between a first point and a second point, which were 10 mm apart, and the center (third point) of the test piece was pushed at a constant speed in the test piece thickness direction using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe.

<Half width>

Bending strength (3-point bending test) was measured by a method according to ASTM D790. A positive electrode including a positive electrode material layer on each of both sides or a negative electrode including a negative electrode material layer on each of both sides was cut into a size of 15 mm × 20 mm to prepare a test piece. According to the 3-point bending method, the test piece was disposed between a first point and a second point, which were 10 mm apart, and the center (third point) of the test piece was pushed at a constant speed in the test piece thickness direction using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe. Then, the test force half the maximum bending strength is calculated, and the half width refers to a distance from a stroke at which the test force reached the test force half the maximum bending strength for the first time when the test force increased after the start of the test to a stroke at which the test force reached the test force half the maximum bending strength after the test force reached the maximum test force and then decreased. That is, when a curve is drawn by taking the stroke of the autograph as an abscissa and the stress as an ordinate, the half-width is specified as the peak width at a stress half the peak of the stress.

In the Examples and the Comparative Examples, the following polymers were used.

PVdF

    A: VdF homopolymer

Weight average molecular weight of 900,000
Storage elastic modulus at 30°C of 1,740 MPa
Storage elastic modulus at 60°C of 1,140 MPa
Melting point of 171°C

B: VdF homopolymer

Weight average molecular weight of 1,800,000
Storage elastic modulus at 30°C of 1,820 MPa
Storage elastic modulus at 60°C of 1,180 MPa
Melting point of 171°C

C: PVdF containing acrylic acid unit

Content of acrylic acid unit of 1.0 mol%
Weight average molecular weight of 1,100,000
Storage elastic modulus at 30°C of 1,280 MPa
Storage elastic modulus at 60°C of 720 MPa
Melting point of 161°C

D: PVdF containing maleic acid unit

Content of maleic acid unit of 0.5 mol%
Weight average molecular weight of 900,000
Storage elastic modulus at 30°C of 1,260 MPa
Storage elastic modulus at 60°C of 760 MPa
Melting point of 167°C

E: PVdF containing CTFE unit

Content of CTFE unit of 2.4 mol%
Weight average molecular weight of 800,000
Storage elastic modulus at 30°C of 1,250 MPa
Storage elastic modulus at 60°C of 880 MPa
Melting point of 168°C

F: PVdF containing HFP unit and acrylic acid unit

$$VdF/HFP = 97.5/2.5 \ (mol\%)$$

Content of acrylic acid unit of 1.0 mol%
Weight average molecular weight of 1,110,000
Storage elastic modulus at 30°C of 1,080 MPa
Storage elastic modulus at 60°C of 750 MPa
Melting point of 150°C

Production Example 1 Fluorine-containing copolymer a (Production of a B-A-B block polymer, wherein A represents a segment A and B represents a segment B.)

(Step 1)

4,000 ml of pure water, 0.8001 g of a 50% aqueous solution of $CH_2=CFCF_2OCF(CF_3)CF_2OCF(CF_3)COONH_4$, and 24.021 g of a 50% aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 400 rpm, VdF was injected under pressure to 1.64 MPa, and further a mixed solution monomer of VdF and 2,3,3,3-tetrafluoropropylene (R1234yf) at a molar ratio of 77.2/22.8 was injected under pressure to 2.001 MPa. 0.16 g of ammonium persulfate dissolved in 4 ml of pure water was injected under nitrogen pressure to start polymerization.

When 24 g of the mixed solution monomer was reached, 1.009 g of 1,4-diiodoperfluorobutane was added. When the pressure dropped to 1.98 MPa, the pressure was increased to 2.01 MPa with the mixed solution monomer. This operation was repeated, and when 1,020 g of the mixed solution monomer was fed, the autoclave was vented to 0.05 MPa, and then the dispersion was subjected to heat treatment for 3 hours. 10 g of the dispersion in the autoclave was sampled and dried to obtain a polymer. The polymer had a formulation of VdF/R1234yf = 77.6/22.4 in a molar ratio, had a glass transition temperature of -12.5°C, and had no heat of fusion.

(Step 2)

After the heat treatment in step 1, VdF was injected under pressure to 2.003 MPa while maintaining the temperature in the autoclave at 80°C, 0.08 g of ammonium persulfate dissolved in 4 ml of pure water was injected under nitrogen pressure to start polymerization. When the pressure dropped to 1.98 MPa, the pressure was increased to 2.01 MPa with VdF. This operation was repeated, and when 180 g of VdF was fed, the autoclave was vented and cooled to recover 5,270 g of a dispersion. The solid content of the dispersion was 23.83% by mass.

Aluminum sulfate was added to this dispersion to cause coagulation, and the resulting coagulated product was dried to obtain 1,250 g of a polymer. The obtained block polymer had a formulation of VdF/R1234yf = 82.0/18.0 in a molar ratio, and had a content of the segment B determined from the formulation of 17.2% by mass. The weight average molecular weight Mw thereof was 1,266,000, the glass transition temperature was - 12.9°C, the melting point was 160.3°C, and the heat of fusion was 8.2 mJ/mg. The extraction in THF was 3% by mass.

Production Example 2 Fluorine-containing copolymer b (Production of a B-A-B block polymer, wherein A represents a segment A and B represents a segment B.)

5,236 g of a dispersion was recovered in the same manner as in Production Example 1, except that the amount of the mixed solution monomer fed in step 1 was changed from 1,020 g to 900 g and the amount of VdF fed in step 2 was changed from 180 g to 300 g. The solid content of the dispersion was 24.10% by mass.

Aluminum sulfate was added to this dispersion to cause coagulation, and the resulting coagulated product was dried to obtain 1,257 g of a polymer. The obtained block polymer had a formulation of VdF/R1234yf = 84.2/15.8 in a molar ratio, and had a content of the segment B determined from the formulation of 28.1% by mass. The weight average molecular weight Mw thereof was 1,206,000, the glass transition temperature was - 11.0°C, the melting point was 161.1°C, and the heat of fusion was 11.0 mJ/mg. The extraction in THF was 3% by mass.

Production Example 3 Fluorine-containing copolymer c (Production of a B-A-B block polymer, wherein A represents a segment A and B represents a segment B.)

5,252 g of a dispersion was recovered in the same manner as in Production Example 1, except that the amount of the mixed solution monomer fed in step 1 was changed from 1,020 g to 780 g and the amount of VdF fed in step 2 was changed from 180 g to 420 g. The solid content of the dispersion was 23.74 wt%.

Aluminum sulfate was added to this dispersion to cause coagulation, and the resulting coagulated product was dried to obtain 1,250 g of a polymer. The obtained block polymer had a formulation of VdF/R1234yf = 85.9/14.1 in a molar ratio, and had a content of the segment B determined from the formulation of 36.0% by mass. The weight average molecular weight Mw thereof was 1,290,000, the glass transition temperature was - 11.2°C, the melting point was 161.4°C, and the heat of fusion was 17.1 mJ/mg. The extraction in THF was 3% by mass.

Production Example 4 Fluorine-containing copolymer d (Production of an A-B-A block polymer, wherein A represents a segment A and B represents a segment B.)

(Step 1)

4,000 ml of pure water, 0.8003 g of a 50% aqueous solution of $CH_2=CFCF_2OCF(CF_3)CF_2OCF(CF_3)COONH_4$, and 24.014 g of a 50% aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 400 rpm, and VdF was injected under pressure to 2.00 MPa. 0.16 g of ammonium persulfate dissolved in 4 ml of pure water was injected under nitrogen pressure to start polymerization. When 24 g of VdF was reached, 1.009 g of 1,4-diiodoperfluorobutane was added. When the pressure dropped to 1.98 MPa, the pressure was increased to 2.01 MPa with VdF. This operation was repeated, and when 300 g of VdF was fed, the autoclave was vented to 0.05 MPa, and then the dispersion was subjected to heat treatment for 3 hours. 10 g of the dispersion in the autoclave was sampled and dried to obtain a polymer. The glass transition temperature thereof was not observed, the melting point was 161.1°C, and the heat of fusion was 44.8 mJ/mg.

(Step 2)

After the heat treatment in step 1, VdF was injected under pressure to 1.64 MPa and a mixed solution monomer of VdF and R1234yf at a molar ratio of 77.5/22.5 was injected under pressure to 2.001 MPa while maintaining the temperature in the autoclave at 80°C, and 0.08 g of ammonium persulfate dissolved in 4 ml of pure water was injected under nitrogen pressure to start polymerization. When the pressure dropped to 1.98 MPa, the pressure was increased to 2.01 MPa with the mixed solution monomer. This operation was repeated, and when 900 g of the mixed solution monomer was fed, the autoclave was vented and cooled to recover 5,271 g of a dispersion. The solid content of the dispersion was 23.80% by mass.

Aluminum sulfate was added to this dispersion to cause coagulation, and the resulting coagulated product was dried to obtain 1,248 g of a polymer. The obtained block polymer had a formulation of VdF/R1234yf = 82.7/17.3 in a molar ratio, and had a content of the segment B determined from the formulation of 24.1% by mass. The weight average molecular weight Mw thereof was 1,426,000, the glass transition temperature was - 10.4°C, the melting point was 160.8°C, and the heat of fusion was 10.8 mJ/mg. The extraction in THF was 3% by mass.

Examples 1 to 11 and Comparative Examples 1 to 5 (Preparation of binder solution)

A fluorine-containing copolymer and a PVdF were dissolved in N-methyl-2-pyrrolidone (NMP) such that the concentration of the binder (fluorine-containing copolymer and PVdF) in the NMP solution was 7% by mass, with a formulation (mass ratio) shown in Table 1, to prepare a composition (binder solution).

(Preparation of positive electrode mixture)

A positive electrode active material (NMC ($LiNi_{0.9}Mn_{0.05}Co_{0.05}O_2$)) and a conductive agent (ketjen black (SuperP Li, manufactured by TIMCAL)) were added to the composition obtained above, and these were sufficiently mixed using a stirrer to prepare a positive electrode mixture. The mass ratio of the positive electrode active material, the conductive agent, and the binder in the positive electrode mixture was 97/1.5/1.5. In addition, the solid concentration of the positive electrode mixture was 74% by mass.

(Creation of positive electrode including positive electrode material layer on one side)

The obtained positive electrode mixture was uniformly applied to one side of a positive electrode current collector (aluminum foil having a thickness of 20 $\mu$m) such that the coating mass was 24.5 mg/cm$^2$, and NMP was completely volatilized, then the positive electrode current collector was pressed using a roll press by applying a pressure of 10 tons twice to create a positive electrode including a positive electrode material layer and the positive electrode current collector.

(Creation of positive electrode including positive electrode material layer on each of both sides)

The obtained positive electrode mixture was uniformly applied to both sides of a positive electrode current collector (aluminum foil having a thickness of 20 $\mu$m) such that the coating mass was 32.0 mg/cm$^2$, and NMP was completely volatilized, then the positive electrode current collector was pressed using a roll press by applying a pressure of 7 tons to create a positive electrode including a positive electrode material layer and the positive electrode current collector.

The evaluation results of the positive electrode mixture and the electrode are shown in Table 1.

[Table 1]

Table 1

| Binder | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|
| Binder | PVdF | A | | | | | 80 | 45 | | | | | | 100 | | | | |
| | | B | | | | | | | 8 | 55 | 80 | | | | 100 | | | |
| | | C | | | | | | | | | | 80 | 90 | | | 100 | | |
| | | E | | | | | | | | | | | | | | | 100 | |
| | | F | | | | | | | | | | | | | | | | 100 |
| | Fluorine-containing copolymer | a | 100 | | | | 20 | | | | | | | | | | | |
| | | b | | 100 | | | | 55 | | | | | | | | | | |
| | | c | | | 100 | | | | 92 | 45 | 20 | | | | | | | |
| | | d | | | | 100 | | | | | | 20 | 10 | | | | | |
| Viscosity change rate (%) after storage at 50°C for 24 hours | | | 145 | 153 | 122 | 156 | 212 | 190 | 118 | 121 | 178 | 193 | 171 | >300 | >300 | >300 | 255 | >300 |
| Peel strength (N/cm) | | | 0.40 | 0.46 | 0.47 | 0.41 | 0.33 | 0.39 | 0.37 | 0.39 | 0.34 | 0.51 | 0.57 | 0.23 | 0.28 | 0.54 | 0.11 | 0.46 |
| Maximum test force (N) | | | 0.90 | 0.99 | 0.89 | 1.04 | 1.10 | 1.05 | 0.91 | 1.01 | 1.13 | 1.10 | 1.18 | 1.28 | 1.33 | 1.34 | 1.19 | 1.23 |
| Half width (mm) | | | 5.98 | 5.81 | 5.85 | 6.19 | 3.35 | 4.02 | 5.45 | 4.28 | 3.65 | 3.71 | 3.12 | 2.82 | 2.71 | 2.68 | 1.94 | 2.02 |

**EP 4 715 909 A1**

Examples 12

19.2% by mass of a graphite-coated film silicon oxide powder (powder in which the surface of silicon oxide was coated with graphite) and 76.8% by mass of a graphite powder as negative electrode active materials, and 4.0% by mass (7% NMP solution) of the fluorine-containing copolymer c as a binder were mixed, and an appropriate amount of NMP was further added to prepare a negative electrode mixture slurry. Next, this negative electrode mixture slurry was applied to both sides of a negative electrode current collector made of copper foil, and this was dried. This was cut off to a predetermined electrode size and rolled by applying a pressure of 10 tons using a roll press to create a negative electrode having a negative electrode material layer formed on both sides of a negative electrode current collector. Evaluation results are shown in Table 2.

Example 13

A negative electrode was created by the same operation as in Example 12 except that 48.0% by mass of a graphite-coated film silicon oxide powder and 48.0% by mass of a graphite powder were used as negative electrode active materials, and 0.8% by mass of PVdF A and 3.2% by mass of the fluorine-containing copolymer c were used as the binders. Evaluation results are shown in Table 2.

Comparative Example 6

A negative electrode was created by the same operation as in Example 12 except that polyacrylic acid (manufactured by Aldrich, weight average molecular weight of 450,000) was used as the binder. Evaluation results are shown in Table 2.

Comparative Example 7

A negative electrode was created by the same operation as in Example 13, except that styrene butadiene rubber (manufactured by JSR, TRD2001) was used as the binder. Evaluation results are shown in Table 2.
[Table 2]

**Table 2**

| | | | Example 12 | Example 13 | Comparative Example 6 | Comparative Example 7 |
|---|---|---|---|---|---|---|
| Binder | | PVdF A | 0 | 20 | 0 | 0 |
| | | Fluorine-containing copolymer c | 100 | 80 | 0 | 0 |
| | | Polyacrylic acid | 0 | 0 | 100 | 0 |
| | | Styrene butadiene rubber | 0 | 0 | 0 | 100 |
| Graphite powder /graphite-coated film silicon oxide powder (mass ratio) | | | 80/20 | 50/50 | 80/20 | 50/50 |
| Maximum test force (N) | | | 0.24 | 0.28 | 0.46 | 0.34 |
| Half width (mm) | | | 4.1 | 3.5 | 1.4 | 2.5 |

Example 14

A negative electrode was created by the same operation as in Example 12 except that 19.2% by mass of silicon powder and 76.8% by mass of graphite powder were used as negative electrode active materials. Evaluation results are shown in Table 3.

Example 15

A negative electrode was created by the same operation as in Example 13 except that 47.5% by mass of silicon powder and 47.5% by mass of graphite powder were used as negative electrode active materials. Evaluation results are shown in Table 3.

Comparative Example 8

A negative electrode was created by the same operation as in Example 14, except that styrene butadiene rubber (manufactured by JSR, TRD2001) was used as the binder. Evaluation results are shown in Table 3.

Comparative Examples 9

Negative electrodes were created by the same operation as in Example 15 except that polyacrylic acid (manufactured by Aldrich, weight average molecular weight of 450,000) was used as a binder. Evaluation results are shown in Table 3.

[Table 3]

**Table 3**

| | | | Example 14 | Example 15 | Comparative Example 8 | Comparative Example 9 |
|---|---|---|---|---|---|---|
| Binder | | PVdF A | 0 | 20 | 0 | 0 |
| | | Fluorine-containing copolymer c | 100 | 80 | 0 | 0 |
| | | Polyacrylic acid | 0 | 0 | 0 | 100 |
| | | Styrene butadiene rubber | 0 | 0 | 100 | 0 |
| Graphite powder/silicon powder (mass ratio) | | | 80/20 | 50/50 | 80/20 | 50/50 |
| Maximum test force (N) | | | 0.32 | 0.36 | 0.41 | 0.55 |
| Half width (mm) | | | 3.5 | 3.1 | 2.3 | 1.6 |

**Claims**

1. A binder for a non-aqueous electrolyte battery, comprising a polymer comprising a segment A having a glass transition temperature of 25°C or less and a segment B having a melting point of 50°C or more.

2. The binder for a non-aqueous electrolyte battery according to claim 1, wherein the segment A has a heat of fusion of less than 5 J/g, and the segment B has a heat of fusion of 5 J/g or more.

3. The binder for a non-aqueous electrolyte battery according to claim 1 or 2, wherein the polymer comprises a chain structure represented by a general formula (1) or a general formula (2):

General formula (1):     A-B-A

General formula (2):     B-A-B

wherein A represents the segment A, and B represents the segment B.

4. The binder for a non-aqueous electrolyte battery according to any one of claims 1 to 3, wherein the segment A of the polymer comprises a fluorine-containing monomer unit.

5. The binder for a non-aqueous electrolyte battery according to any one of claims 1 to 4, wherein the segment A of the polymer comprises vinylidene fluoride unit.

6. The binder for a non-aqueous electrolyte battery according to any one of claims 1 to 5, wherein the segment A of the polymer comprises vinylidene fluoride unit and at least one selected from the group consisting of repeating units represented by any of the following formulas:

Formula:

$$-CF_2-CF[-CF_3]-$$

Formula:

$$-CH_2-CFRf^1-$$

wherein $Rf^1$ is a linear or branched fluorinated alkyl group or fluorinated alkoxy group having 1 to 12 carbon atoms, and, when the number of carbon atoms is 2 or more, optionally includes oxygen atom between carbon atoms thereof,
Formula:

$$-CHF-CHRf^2-$$

wherein $Rf^2$ is a linear or branched fluorinated alkyl group or fluorinated alkoxy group having 1 to 12 carbon atoms, and, when the number of carbon atoms is 2 or more, optionally includes oxygen atom between carbon atoms thereof.

7. The binder for a non-aqueous electrolyte battery according to any one of claims 1 to 6, wherein the segment A of the polymer comprises vinylidene fluoride unit and 2,3,3,3-tetrafluoropropene unit.

8. The binder for a non-aqueous electrolyte battery according to any one of claims 5 to 7, wherein a content of vinylidene fluoride unit in the segment A of the polymer is 99 to 15 mol% based on all monomer units constituting the segment A.

9. The binder for a non-aqueous electrolyte battery according to any one of claims 1 to 8, wherein the segment B of the polymer comprises a fluorine-containing monomer unit.

10. The binder for a non-aqueous electrolyte battery according to any one of claims 1 to 9, wherein the segment B of the polymer comprises vinylidene fluoride unit.

11. The binder for a non-aqueous electrolyte battery according to claim 10, wherein a content of vinylidene fluoride unit in the segment B of the polymer is 97 mol% or more based on all monomer units constituting the segment B.

12. The binder for a non-aqueous electrolyte battery according to any one of claims 1 to 11, wherein
the segment B of the polymer comprises

only vinylidene fluoride unit, or
vinylidene fluoride unit and at least one monomer unit selected from the group consisting of tetrafluoroethylene unit, hexafluoropropylene unit, 2,3,3,3-tetrafluoropropene unit, and (meth)acrylic acid unit.

13. The binder for a non-aqueous electrolyte battery according to any one of claims 1 to 12, wherein a mass ratio of the segment A to the segment B in the polymer is 40/60 to 95/5.

14. The binder for a non-aqueous electrolyte battery according to any one of claims 1 to 13, wherein

the polymer comprises a chain structure represented by a general formula (1) or a general formula (2):

General formula (1):          A-B-A

General formula (2):          B-A-B

wherein A represents the segment A, and B represents the segment B,
the segment A of the polymer has a glass transition temperature of -10°C or less, and comprises vinylidene fluoride unit and 2,3,3,3-tetrafluoropropene unit, wherein a content of 2,3,3,3-tetrafluoropropene unit in the segment A is 18 to 30 mol% based on all monomer units constituting the segment A, and a content of vinylidene fluoride unit in the segment A is 70 to 82 mol% based on all monomer units constituting the segment A,
the segment B of the polymer has a melting point of 140 to 200°C, and comprises vinylidene fluoride unit, wherein a content of vinylidene fluoride unit in the segment B is 97 mol% or more based on all monomer units constituting the segment B,
a mass ratio of the segment A to the segment B in the polymer is 50/50 to 90/10, and
a weight average molecular weight of the polymer is 200,000 to 2,000,000.

15. A binder for a non-aqueous electrolyte battery, comprising a polymer, wherein the polymer has a glass transition temperature and a melting point, comprises 2,3,3,3-tetrafluoropropene unit, and has an extraction in tetrahydrofuran at 25°C of 5% by mass or less.

16. The binder for a non-aqueous electrolyte battery according to claim 15, wherein the polymer further comprises vinylidene fluoride unit.

17. The binder for a non-aqueous electrolyte battery according to claim 15 or 16, wherein the polymer comprises two or more segments.

18. The binder for a non-aqueous electrolyte battery according to any one of claims 15 to 17, wherein

the glass transition temperature of the polymer is -10°C or less,
the melting point of the polymer is 140 to 200°C,
the polymer comprises vinylidene fluoride unit and 2,3,3,3-tetrafluoropropene unit, wherein a content of 2,3,3,3-tetrafluoropropene unit is 9 to 24 mol% based on all monomer units constituting the polymer, and a content of vinylidene fluoride unit is 76 to 91 mol% based on all monomer units constituting the polymer,
the extraction in tetrahydrofuran at 25°C of the polymer is 2 to 4% by mass, and
a weight average molecular weight of the polymer is 200,000 to 2,000,000.

19. An electrode mixture for a non-aqueous electrolyte battery, comprising the binder for a non-aqueous electrolyte battery according to any one of claims 1 to 18.

20. The electrode mixture for a non-aqueous electrolyte battery according to claim 19, further comprising a powder electrode material, and water or a non-aqueous solvent.

21. An electrode for a non-aqueous electrolyte battery, comprising an electrode material layer formed of the electrode mixture according to claim 19 or 20.

22. A non-aqueous electrolyte battery comprising the electrode according to claim 21.

## INTERNATIONAL SEARCH REPORT

| International application No. |
|---|
| **PCT/JP2024/032118** |

**A.    CLASSIFICATION OF SUBJECT MATTER**

*H01M 4/62*(2006.01)i; *C08F 293/00*(2006.01)i; *H01M 4/13*(2010.01)i; *H01M 4/139*(2010.01)i
FI:    H01M4/62 Z; H01M4/139; H01M4/13; C08F293/00

According to International Patent Classification (IPC) or to both national classification and IPC

**B.    FIELDS SEARCHED**

Minimum documentation searched (classification system followed by classification symbols)

H01M4/62; C08F293/00; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-514095 A (DSM IP ASSETS B.V.) 03 June 2021 (2021-06-03) claims, paragraphs [0012], [0030]-[0031], examples | 1-2, 13, 19-22 |
| A | | 3-12, 14-18 |
| X | JP 2000-123874 A (MATSUSHITA ELECTRIC INDUSTRIAL CO., LTD.) 28 April 2000 (2000-04-28) claims, paragraph [0011], examples | 1-2, 13, 19-22 |
| A | | 3-12, 14-18 |
| X | JP 11-067274 A (DAIKIN INDUSTRIES, LTD.) 09 March 1999 (1999-03-09) claims, paragraphs [0027]-[0033], examples | 1-6, 8-13, 19-22 |
| A | | 7, 14-18 |
| X | JP 2018-530662 A (ARKEMA FRANCE) 18 October 2018 (2018-10-18) claims, paragraph [0180], examples | 1, 3-10, 12-13, 15-22 |
| A | | 2, 11, 14 |

☑ Further documents are listed in the continuation of Box C.        ☑ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **12 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2024/032118** |

### C. DOCUMENTS CONSIDERED TO BE RELEVANT

| Category* | Citation of document, with indication, where appropriate, of the relevant passages | Relevant to claim No. |
|---|---|---|
| X | CN 115286805 A (NINGDE CONTEMPORARY AMPEREX TECHNOLOGY CO., LTD.) 04 November 2022 (2022-11-04) claims, paragraphs [0069]-[0071], [0089], examples | 1-3, 9-13, 19-22 |

Form PCT/ISA/210 (second sheet) (July 2022)

## INTERNATIONAL SEARCH REPORT

International application No.

**PCT/JP2024/032118**

| **Box No. III** | **Observations where unity of invention is lacking (Continuation of item 3 of first sheet)** |
| --- | --- |

This International Searching Authority found multiple inventions in this international application, as follows:

Document 2: JP 2000-123874 A (MATSUSHITA ELECTRIC INDUSTRIAL CO., LTD.) 28 April 2000 (2000-04-28),
      claims, paragraph [0011], examples
Document 3: JP 11-067274 A (DAIKIN INDUSTRIES, LTD.) 09 March 1999 (1999-03-09),
      claims, paragraphs [0027]-[0033], examples
Document 5: CN 115286805 A (NINGDE CONTEMPORARY AMPEREX TECHNOLOGY CO., LTD.), 04 November 2022 (2022-11-04),
      claims, paragraphs [0069]-[0071], [0089], examples

(Invention 1) Claims 1-14 and the parts of claims 19-22 citing claims 1-14
      Claims 1-14 and the parts of claims 19-22 citing claims 1-14 have the special technical feature of "a binder for a non-aqueous electrolyte battery, comprising a polymer that includes a segment A having a glass transition temperature of 25°C or less, and a segment B having a melting point of 50°C or more", and are therefore classified as invention 1.

(Invention 2) Claims 15-18 and the parts of claims 19-22 citing claims 15-18
      Claims 15-18 and the parts of claims 19-22 citing claims 15-18 share, with claim 1 classified as invention 1, the common technical feature of "a binder for a non-aqueous electrolyte battery, comprising a polymer", wherein the "polymer" has a "glass transition temperature" and a "melting point". In the light of the content disclosed in documents 2-3, and 5, however, this technical feature does not make a contribution over the prior art, and therefore cannot be considered a special technical feature. Moreover, these inventions do not share any other same or corresponding special technical features.
      Furthermore, claims 15-18 and the aforesaid parts of claims 19-22 are not dependent on claim 1. In addition, claims 15-18 and the aforesaid parts of claims 19-22 are not substantially identical to or similarly closely related to any of the claims classified as invention 1.
      Therefore, claims 15-18 and the aforesaid parts of claims 19-22 cannot be classified as invention 1.
      Claims 15-18 and the aforesaid parts of claims 19-22 have the special technical feature of "a binder for a non-aqueous electrolyte battery, comprising a polymer, wherein the polymer has a glass transition temperature and a melting point, contains a 2,3,3,3-tetrafluoropropene unit, and has a tetrahydrofuran extraction amount at 25°C of 5% by mass or less", and are therefore classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/032118**

| Patent document cited in search report | | | Publication date (day/month/year) | Patent family member(s) | | | Publication date (day/month/year) |
|---|---|---|---|---|---|---|---|
| JP | 2021-514095 | A | 03 June 2021 | US<br>claims, paragraphs [0030],<br>[0049]-[0050], examples<br>WO<br>EP<br>CN<br>KR | 2020/0381780<br><br><br>2019/158782<br>3756228<br>111742426<br>10-2020-0121852 | A1<br><br><br>A1<br>A1<br>A<br>A | |
| JP | 2000-123874 | A | 28 April 2000 | US<br>claims, column 6, lines 36-46,<br>examples<br>WO<br>EP | 6368746<br><br><br>2000/024077<br>1049186 | B1<br><br><br>A1<br>A1 | |
| JP | 11-067274 | A | 09 March 1999 | US<br>claims, column 4, line 59 to<br>column 7, line 13, examples<br>WO<br>EP | 6387570<br><br><br>1999/010946<br>1011165 | B1<br><br><br>A1<br>A1 | |
| JP | 2018-530662 | A | 18 October 2018 | US<br>claims, paragraph [0251],<br>examples<br>WO<br>EP<br>CN<br>KR | 2018/0305483<br><br><br>2017/068276<br>3365377<br>108137724<br>10-2018-0068991 | A1<br><br><br>A1<br>A1<br>A<br>A | |
| CN | 115286805 | A | 04 November 2022 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011002097 A
- JP 2013219016 A
- WO 2022039260 A
- JP 53003495 A
- JP 61049327 A